# EUROPÄISCHE PATENTANMELDUNG

(11) **EP 3 422 657 A1**
(43) Veröffentlichungstag der Anmeldung: **02.01.2019**
(21) Anmeldenummer: 17177901.0
(22) Anmeldetag: 26.06.2017
(51) Int. Cl.: H04L 29/06

(54) **VERFAHREN UND SICHERHEITS-STEUERUNGSEINRICHTUNGEN ZUM SENDEN UND EMPFANGEN KRYPTOGRAPHISCH GESCHÜTZTER NETZWERKPAKETE**

(71) Anmelder: Siemens Aktiengesellschaft, 80333 München (DE)
(72) Erfinder: Aschauer, Hans, 81829 München (DE); Falk, Rainer, 85586 Poing (DE); Fischer, Kai, 85598 Baldham (DE); Fries, Steffen, 85598 Baldham (DE); Heintel, Markus, 81377 München (DE); Klasen, Wolfgang, 85521 Ottobrunn (DE); Pfau, Axel, 80333 München (DE)

(57) **Zusammenfassung**

Die Erfindung betrifft modulare Sicherheits-Steuerungseinrichtungen zum geschützten Übertragen von Netzwerkpaketen. Insbesondere wird ein Austausch von Netzwerkdaten (z. B. Netzwerkpakete) zwischen einem ersten internen Quellnetzwerk und einem zweiten internen Netzwerk (z. B. zweites Zielnetzwerk) über ein nicht vertrauenswürdiges internes und/oder externes Netzwerk (erstes Zielnetzwerk) ermöglicht.

## Beschreibung

Es gibt einen Bedarf daran, einen sicheren Austausch von Netzwerkpaketen zu ermöglichen, damit Industrieanlagen über eine Datenkommunikationsverbindung gesteuert werden können.

Die Aufgabe der vorliegenden Erfindung ist es, Verfahren und Sicherheits-Steuerungseinrichtungen bereitzustellen, die es erlauben Industrieanlagen sicher zu steuern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß eines ersten Aspekts betrifft die Erfindung eine erste modulare Sicherheits-Steuerungseinrichtung zum Senden kryptographisch geschützter Netzwerkpakete, umfassend:
- ein Steuerungs-Grundgerät;
- eine Klassifikationseinheit, wobei
   - die Klassifikationseinheit mittels eines Paketfilters zum Selektieren von Netzwerkpaketen unter Verwendung von vorgegebenen Selektionsparametern eingerichtet ist;
- ein Sicherheitsmodul, wobei
   - das Sicherheitsmodul für eine kryptographische Verarbeitung zumindest eines Netzwerkpaketteils der selektieren Netzwerkpakete eingerichtet ist,
   - das Sicherheitsmodul mittels einer Datenverbindung über eine Datenschnittstelle mit dem Steuerungs-Grundgerät verbunden ist,
   - das Steuerungs-Grundgerät insbesondere zur Abfrage einer Identität und/oder Authentizität des Sicherheitsmoduls eingerichtet ist;
- eine Paketanpassungseinheit, wobei
   - die Paketanpassungseinheit dazu eingerichtet ist, die kryptographisch verarbeiteten Netzwerkpakete an ein erstes Zielnetzwerk anzupassen,
- das Steuerungs-Grundgerät zum Zusammenwirken mit dem Sicherheitsmodul eingerichtet ist, damit die erste modulare Sicherheits-Steuerungseinrichtung die kryptographisch verarbeiteten Netzwerkpakete als kryptographisch geschützte Netzwerkpakete an das erste Zielnetzwerk sendet.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einem Speicherbaustein (z. B. eine Festplatte, ein Flashspeicher oder ein Arbeitsspeicher) zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit", "Speichermodul", "Speicherbaustein" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul", "Einheit" und dergleichen kann im Zusammenhang mit der Erfindung beispielsweise ein Prozessor und/oder ein Speicher zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder eines seiner Ausführungsbeispiele zu realisieren.

Unter einer "kryptographische Verarbeitung" und dergleichen kann im Zusammenhang mit der Erfindung beispielsweise ein Verschlüsseln oder ein Schützen durch eine digitale Signatur verstanden werden. Hierdurch wird insbesondere der Netzwerkpaketteil eines selektierten Netzwerkpaketes geschützt werden. Unter einem Aufheben eines kryptographischen Schutzes kann in diesen Zusammenhang insbesondere ein Entschlüsseln verstanden werden. Unter einem Auswerten der kryptographisch geschützten Netzwerkpakete kann in diesen Zusammenhang beispielsweise ein prüfen der digitalen Signatur verstanden.

Unter einer "kryptografische Funktionalität" und dergleichen kann im Zusammenhang mit der Erfindung insbesondere kryptographische Verarbeitung, das Aufheben eines kryptographischen Schutzes oder das Auswerten eines kryptographischen Schutzes verstanden werden. Beispielsweise wird die kryptografische Funktionalität auf die kryptographisch geschützten Netzwerkpakete oder auf die kryptographisch zu verarbeitenden Netzwerkpakete angewendet.

Unter "Klassifizierung", "Klassifizieren", "Selektieren" und dergleichen kann im Zusammenhang mit der Erfindung insbesondere ein Auswählen von Netzwerkpaketen anhand vorgegebener (Selektions)Parameter verstanden werden.

Unter "Paketzusatzdaten" oder "Tag" kann im Zusammenhang mit der Erfindung insbesondere eine Information über eine Subnetzmaske, eine Zieladresse in Form eine IP-Adresse oder ein Protokolltyp (z. B. IPv4 oder IPv6) verstanden werden. Unter "Paketzusatzdaten" oder "Tag" kann im Zusammenhang mit der Erfindung beispielsweise auch ein Ethertype, eine Strukturinformation wie Lage/Grenzen und Länge der Payload aus höheren Netzwerkschichten (z.B. Start- und Endoffset der IP-Payload in einem Ethernet Frame) verstanden werden.

Unter einer "gesicherten Schnittstelle" und dergleichen kann im Zusammenhang mit der Erfindung insbesondere eine Schnittstelle verstanden werden, die beispielsweise erst genutzt werden kann, wenn die Identität und/oder die Authentizität eines Nutzers/Aufrufenden der gesicherten Schnittstelle festgestellt und/oder akzeptiert wurde. Dies kann beispielsweise über digitale Signaturen oder Zertifikate realisiert werden. Es kann beispielsweise in den gesicherten Schnittstellen der entsprechenden Einheiten oder der Einheiten selbst jeweils eine Liste hinterlegt sein, welche Identitäten bzw. Nutzer auf die gesicherte Schnittstelle zugreifen dürfen oder es kann in dieser Liste hinterlegt sein, welcher Nutzer insbesondere welche Funktionen/Aktionen und/oder Daten von der Schnittstelle lesen und/oder schreiben und/oder nutzen kann. Wird beispielsweise festgestellt, dass der Nutzer nicht berechtigt ist eine gesicherte Schnittstelle zu nutzen, so wird z. B. eine entsprechende Anfrage zur Ausführung einer Funktion/Aktion von der gesicherten Schnittstelle unterdrückt. Ist der Nutzer beispielsweise berechtigt, so kann insbesondere die entsprechende Funktion/Aktion ausgeführt werden. Unter einem Nutzer kann dabei insbesondere eine andere Einheit, das Steuerungs-Grundgerät oder auch das Sicherheitsmodul verstanden werden. Unter einer "gesicherten Schnittstelle" und dergleichen kann im Zusammenhang mit der Erfindung insbesondere auch eine Schnittstelle verstanden werden, die beispielsweise über spezielle phyikalische Eigenschaften verfügt (z.B. physikalisch festgelegte Punkt-zu-Punkt Kommunikation ggf. mit Tamper-Protection um eine Veränderung zu erkennen) verstanden werden. Dies kann beispielsweise auch dadurch erreicht werden, indem ein Zugriff auf die Schnittstellen zugriffsbeschränkt ist.

Die erste modulare Sicherheits-Steuerungseinrichtung ist dahingehend vorteilhaft, um insbesondere einen Austausch von Netzwerkdaten (z. B. Netzwerkpaketen) zwischen einem ersten internen Quellnetzwerk und einem zweiten internen Netzwerk (z. B. zweites Zielnetzwerk) über ein nicht vertrauenswürdiges internes und/oder externes Netzwerk (erstes Zielnetzwerk) zu ermöglichen.

Dazu werden insbesondere die Netzwerkdaten einer kryptographischen Verarbeitung unterworfen. Die kryptografisch bearbeiteten Netzwerkdaten werden nach der kryptographischen Verarbeitung insbesondere wieder als Netzwerkpakete verpackt (Encapsulation). Daneben ist beispielsweise auch eine Anpassung an die Eigenschaften (Protokoll, Netzwerkschicht) des externen Netzes notwendig (z.B. Ethernet, TCP/IP, MPLS).

Bei einer ersten Ausführungsform der ersten modularen Sicherheits-Steuerungseinrichtung umfasst das Sicherheitsmodul die Paketanpassungseinheit und/oder die Klassifikationseinheit.

Die erste modulare Sicherheits-Steuerungseinrichtung ist dahingehend vorteilhaft, um insbesondere die Arbeitsschritte zur kryptographischen Bearbeitung und der ggf. nötigen Protokollanpassungen voneinander zu trennen. Beispielsweise kann durch eine geschickte Wahl der Schnittstellen und Minimierung gegenseitiger Abhängigkeiten eine Langzeitsicherheit (longterm security) und/oder Crypto Agilität und/oder eine Rückwirkungsfreiheit erreicht werden, die insbesondere im industriellen Umfeld wichtig sind. Dabei kann beispielsweise unter Rückwirkungsfreiheit verstanden werden, dass es insbesondere nur einen definierten Datenpfad zum Senden von Daten gibt, und die Daten insbesondere auf diesem Pfad zwingend kryptographisch bearbeitet werden.

Die Erfindung erlaubt insbesondere die einfache Realisierung einer Netzwerkkomponente auf einer gemeinsamen Hardwareplattform, die zum Schutz von sowohl L2 als auch L3 Netzverkehr insbesondere auch für einen Schutz auf Transportebene, Applikationsprotokollebene oder von Applikationsdaten geeignet ist. Insbesondere die Separierung und Anbindung der Einheiten und/oder des Steuerungsgrundgerätes und/oder des Sicherheitsmoduls über eine schmale und trotzdem universell mit unterschiedlichen kryptographischen Algorithmen und Verschlüsselungsverfahren anwendbare API/ABI (engl. application binary interface, (ABI) application programming interface, (API)) Schnittstelle ermöglicht die einfache Integration von (kunden-)individueller Anpassung der kryptographischen Funktionalität. Dabei können unter einer schmalen API/ABI Schnittstelle oder einer gesicherten Schnittstelle beispielsweise vorgegebene Datenstrukturen zum Datenaustausch, geschützte Speicherbereiche zum Datenaustausch, Speicherbereiche mit definierten Lese- und Schreibrechten für die Einheiten und/oder das Sicherheitsmodul und/oder das Steuerungs-Grundgerät verstanden werden. Eine schmale API/ABI-Schnittstelle ist vorteilhaft, da insbesondere nur eine geringe Angriffsfläche existiert. Daher kann eine solche schmale Schnittstelle effizient mit hoher Güte realisiert werden. Es werden hierzu beispielsweise Eigenschaften für Parameter der Schnittstelle festgelegt, wie Schlüssellänge, Blocklänge etc. festgelegt.

Bei einer weiteren Ausführungsform der ersten modularen Sicherheits-Steuerungseinrichtung umfasst das Steuerungs-Grundgerät die Paketanpassungseinheit und/oder die Klassifikationseinheit.

Die erste modulare Sicherheits-Steuerungseinrichtung ist dahingehend vorteilhaft, um insbesondere die Arbeitsschritte zur kryptographischen Bearbeitung und der ggf. nötigen Protokollanpassungen voneinander zu trennen. Beispielsweise kann durch eine geschickte Wahl der Schnittstellen und Minimierung gegenseitiger Abhängigkeiten eine Langzeitsicherheit (longterm security) und/oder Crypto Agilität und/oder eine Rückwirkungsfreiheit erreicht werden, die insbesondere im industriellen Umfeld wichtig sind.

Die Erfindung erlaubt insbesondere die einfache Realisierung einer Netzwerkkomponente auf einer gemeinsamen Hardwareplattform, die zum Schutz von sowohl L2 als auch L3 Netzverkehr geeignet ist. Insbesondere die Separierung und Anbindung der Einheiten und/oder des Steuerungsgrundgerätes und/oder des Sicherheitsmoduls über eine schmale API/ABI Schnittstelle ermöglicht die einfache Integration von (kunden-)individueller Anpassung der kryptographischen Funktionalität. Dabei können unter einer schmalen API/ABI Schnittstelle oder unter einer gesicherten Schnittstelle beispielsweise vorgegebene Datenstrukturen zum Datenaustausch, geschützte Speicherbereiche zum Datenaustausch, Speicherbereiche mit definierten Lese- und Schreibrechten (z. B. für die Einheiten und/oder das Sicherheitsmodul und/oder das Steuerungs-Grundgerät) verstanden werden.

Bei einer weiteren Ausführungsform der ersten modularen Sicherheits-Steuerungseinrichtung ist das Sicherheitsmodul lösbar mit dem Steuerungs-Grundgerät verbunden.

Bei einer weiteren Ausführungsform der ersten modularen Sicherheits-Steuerungseinrichtung ist das Steuerungs-Grundgerät bei gelöstem Sicherheitsmodul mit einer Grundgeräte-Funktionalität betreibbar.

Bei einer weiteren Ausführungsform der ersten modularen Sicherheits-Steuerungseinrichtung ist das Steuerungs-Grundgerät weiterhin zum Zusammenwirken mit einem gegen das Sicherheitsmodul austauschbaren zweiten Sicherheitsmodul mit einer zweiten kryptographischen Funktionalität zu der kryptographischen Verarbeitung und/oder einer weiteren Sicherheitsfunktion der Sicherheits-Steuereinrichtung eingerichtet.

Bei einer weiteren Ausführungsform der ersten modularen Sicherheits-Steuerungseinrichtung umfasst das Steuerungs-Grundgerät ein Gehäuse, wobei
- im Gehäuse eine Ausnehmung zur zumindest teilweisen Aufnahme des Sicherheitsmoduls ausgebildet und eingerichtet ist,
- weiterhin im Steuerungs-Grundgerät ein Schnittstellen-Verbindungselement für die Datenschnittstelle derart vorgesehen ist, dass beim in der Ausnehmung aufgenommenen Sicherheitsmodul ein Datenaustausch zwischen Steuerungs-Grundgerät und Sicherheitsmodul erfolgt.

Bei einer weiteren Ausführungsform der ersten modularen Sicherheits-Steuerungseinrichtung ist die Klassifikationseinheit zum Speichern von Paketzusatzdaten für ein jeweiliges Netzwerkpaket eingerichtet und/oder
die Paketanpassungseinheit berücksichtigt beim Anpassen zumindest einen Teil der Paketzusatzdaten und/oder das erste Sicherheitsmodul berücksichtigt zumindest einen Teil der Paketzusatzdaten beim kryptographischen Verarbeiten.

Bei einer weiteren Ausführungsform der ersten modularen Sicherheits-Steuerungseinrichtung umfassen die Einheiten jeweils gesicherte Schnittstellen, wobei ein Übermitteln von Daten an die Einheiten oder Abrufen von Daten von den Einheiten ausschließlich über die jeweilige gesicherte Schnittstelle durchführbar ist.

Gemäß eines weiteren Aspekts betrifft die Erfindung eine zweite modulare Sicherheits-Steuerungseinrichtung zum Empfangen kryptographisch geschützter Netzwerkpakete, umfassend:
- ein Steuerungs-Grundgerät;
- eine Klassifikationseinheit, wobei
   - die Klassifikationseinheit mittels eines Paketfilters zum Selektieren von Netzwerkpaketen unter Verwendung von vorgegebenen Selektionsparamatern eingerichtet ist,
   - zumindest ein Netzwerkpaketteil der selektierten Netzwerkpakete kryptographisch geschützt ist;
- ein Sicherheitsmodul, wobei
   - das Sicherheitsmodul zum Aufheben und/oder Auswerten eines kryptographischen Schutzes des geschützten Netzwerkpaketteils der selektierten Netzwerkpakete eingerichtet ist,
   - das Sicherheitsmodul mittels einer Datenverbindung über eine Datenschnittstelle mit dem Steuerungs-Grundgerät verbunden ist,
   - das Steuerungs-Grundgerät insbesondere zur Abfrage einer Identität und/oder Authentizität des Sicherheitsmoduls eingerichtet ist;
- eine Paketanpassungseinheit, wobei
   - die Paketanpassungseinheit dazu eingerichtet ist, die ausgewerteten und/oder die Netzwerkpakete ohne kryptographischen Schutz an ein zweites Zielnetzwerk anzupassen,
- das Steuerungs-Grundgerät zum Zusammenwirken mit dem Sicherheitsmodul eingerichtet ist, damit die zweite modulare Sicherheits-Steuerungseinrichtung die ausgewerteten und/oder die Netzwerkpakete ohne kryptographischen Schutz an das zweite Netzwerk sendet.

Bei einer weiteren Ausführungsform der zweiten modularen Sicherheits-Steuerungseinrichtung wird beim Auswerten eine Integrität und/oder Authentizität der Netzwerkpakete überprüft, wobei insbesondere das Senden der Netzwerkpakete in das zweite Netzwerk abhängig von einem Ergebnis des Auswertens unterdrückt wird (z. B. wenn eine digitale Signatur nicht erfolgreich bestätigt/verifiziert werden konnte).

Bei einer weiteren Ausführungsform der zweiten modularen Sicherheits-Steuerungseinrichtung ist die Klassifikationseinheit zum Speichern von Paketzusatzdaten für ein jeweiliges Netzwerkpaket eingerichtet und/oder
die Paketanpassungseinheit berücksichtigt beim Anpassen zumindest einen Teil der Paketzusatzdaten und/oder das zweite Sicherheitsmodul berücksichtigt zumindest einen Teil der Paketzusatzdaten beim Auswerten oder Aufheben des kryptographischen Schutzes.

Gemäß eines weiteren Aspekts betrifft die Erfindung ein Verfahren zum Senden kryptographisch geschützter Netzwerkpakete mit folgenden Verfahrensschritten:
- Selektieren von Netzwerkpaketen mittels eines Paketfilters unter Verwendung von vorgegebenen Selektionsparamatern;
- kryptographisches Verarbeiten zumindest eines Netzwerkpaketteils der jeweils selektierten Netzwerkpakete;
- Anpassen der kryptographisch verarbeiteten Netzwerkpakete an ein erstes Zielnetzwerk,
- Senden der kryptographisch verarbeiteten Netzwerkpakete als kryptographisch geschützte Netzwerkpakete an das erste Zielnetzwerk.

Gemäß eines weiteren Aspekts betrifft die Erfindung ein Verfahren zum Empfangen kryptographisch geschützter Netzwerkpakete mit folgenden Verfahrensschritten:
- Empfangen und Selektieren von Netzwerkpaketen mittels eines Paketfilters unter Verwendung von vorgegebenen Selektionsparamatern, wobei zumindest eines Teils eines jeweiligen Netzwerkpaketes kryptographisch geschützt ist;
- Aufheben und/oder Auswerten eines kryptographischen Schutzes des geschützten Netzwerkpaketteils der jeweils selektierten Netzwerkpakete;
- Anpassen der ausgewerteten Netzwerkpakete und/oder der Netzwerkpakete ohne kryptographischen Schutz an ein zweites Zielnetzwerk;
- Senden der ausgewerteten Netzwerkpakete und/oder der Netzwerkpakete ohne kryptographischen Schutz an das zweite Zielnetzwerk.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren, durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannten erfindungsgemäßen modularen Sicherheits-Steuerungseinrichtungen erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es der/die erfindungsgemäßen modularen Sicherheits-Steuerungseinrichtungen erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: Beispielhafte Steuerung mit Sicherheitsmodul zur Steuerung einer Anlage;
- Fig. 2: Steuerungseinrichtung gemäß Fig. 1 mit externer Modulschnittstelle des Sicherheitsmoduls;
- Fig. 3: Steuerungseinrichtung gemäß Fig. 1 mit modifizierter interner Kommunikation;
- Fig. 4: Steuerungseinrichtung gemäß Fig. 1 mit zweitem Sicherheitsmodul;
- Fig. 5: Beispielhafter Verfahrensablauf bei der kryptografischen Verarbeitung von Daten.
- Fig. 6: ein weiteres Ausführungsbeispiel der Erfindung als ein Ablaufdiagramm;
- Fig. 7: ein weiteres Ausführungsbeispiel der Erfindung als ein Ablaufdiagramm;
- Fig. 8: ein weiteres Ausführungsbeispiel der Erfindung als Vorrichtung;
- Fig. 9: ein weiteres Ausführungsbeispiel der Erfindung als Vorrichtung;
- Fig. 10: ein weiteres Ausführungsbeispiel der Erfindung als Vorrichtung;
- Fig. 11: ein weiteres Ausführungsbeispiel der Erfindung als Vorrichtung;
- Fig. 12: ein weiteres Ausführungsbeispiel der Erfindung als Vorrichtung;
- Fig. 13: ein weiteres Ausführungsbeispiel der Erfindung als Vorrichtung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder einen Speicherbaustein auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

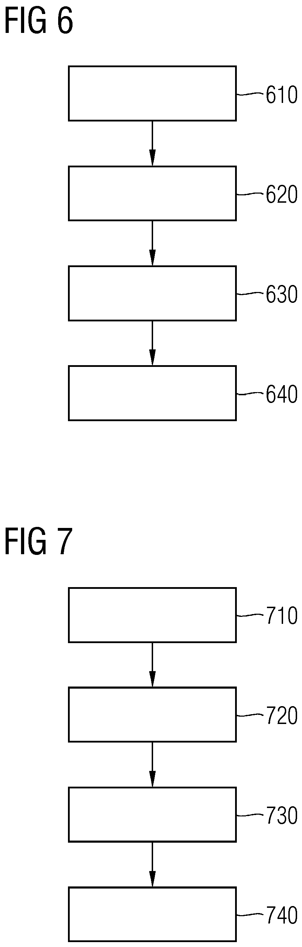

Für die Erfindung werden zunächst die Ausgestaltungsmöglichkeiten für die modularen Sicherheits-Steuerungseinrichtungen erläutert und wie das Sicherheitsmodul beispielsweise an das Steuerungs-Grundgerät angebunden sein kann. Diese Ausführungsbeispiele lassen sich insbesondere auf die Ausführungsbeispiele der Fig. 6 - 13 problemlos übertragen.

Der Begriff "Sicherheit" bezieht sich im Rahmen der vorliegenden Beschreibung im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird.

Eine derartige modulare Sicherheits-Steuerungseinrichtung ist zur Steuerung eines Geräts oder einer Anlage ausgebildet und eingerichtet und umfasst ein Steuerungs-Grundgerät, wobei das Steuerungs-Grundgerät derart ausgebildet und eingerichtet ist, dass vermittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird. Weiterhin umfasst die modulare Sicherheits-Steuerungseinrichtung ein Sicherheitsmodul, welches zur Bereitstellung oder Ausführung einer kryptografischen Funktionalität (z. B. die kryptographische Verarbeitung des jeweiligen Teils des Netzwerkpaketes zum Erreichen eines kryptographischen Schutzes des Netzwerkpaketes, das Auswerten des kryptographischen Schutzes und/oder das Aufheben des kryptographischen Schutzes) für das Steuerungs-Grundgerät ausgebildet und eingerichtet ist. Dabei ist das Sicherheitsmodul vermittels einer Datenverbindung über eine Datenschnittstelle mit dem Steuerungs-Grundgerät verbunden. Das Steuerungs-Grundgerät ist zum Zusammenwirken mit dem Sicherheitsmodul zum Erreichen einer Sicherheitsfunktion der Sicherheits-Steuereinrichtung und zur Abfrage einer Identität und/oder Authentizität des Sicherheitsmoduls ausgebildet und eingerichtet.

Eine derartige modulare Sicherheits-Steuerungseinrichtung bietet eine verbesserte Möglichkeit beispielsweise zur Daten- oder Kommunikations-Sicherheit einer derartigen Steuerungseinrichtung, da über das zusätzliche Sicherheitsmodul beispielsweise die Möglichkeit besteht, eigene oder fremd entwickelte Sicherheits-Kryptomodule oder ähnliche Module zur Verbesserung der Sicherheitseigenschaften der Steuerungseinrichtung hinzuzufügen. Durch das Zusammenwirken der Funktionalität des Sicherheitsmoduls mit der bereits im Grundgerät implementierten Funktionalität lässt sich so flexibel und gegebenenfalls anwenderspezifisch die Sicherheit einer Steuerungseinrichtung verbessern und spezifisch und flexibel anpassen.

Weiterhin kann ein Nutzer auf diese Weise z.B. auch durch eine eigenständige Implementierung und/oder ein eigenes Einbringen der Sicherheitsfunktionalität im Rahmen der modularen Komponente die Vertrauenswürdigkeit der Sicherheitsfunktionalität erhöhen, da er so die hohe Vertrauenswürdigkeit der eigenen kontrollierbaren Umgebung ausnutzen kann und weniger bzw. nicht von der Vertrauenswürdigkeit Dritter abhängig ist.

Die genannte Abfrage von Identitäts- und/oder Authentizitäts-Informationen ermöglicht z.B. eine Prüfung, ob nur zur entsprechenden Verwendung vorgesehene Komponenten eingesetzt werden bzw. werden können, was die Sicherheits-Eigenschaften der Steuerungseinrichtung noch weiter verbessert.

Die Sicherheits-Steuerungseinrichtung kann beispielsweise als ein Automatisierungssystem, ein "Controller", eine speicherprogrammierbare Steuerung (eine sogenannte "SPS" oder "PLC"), ein Industrie-PC (ein sogenannter "IPC"), ein Computer, gegebenenfalls inklusive eines Echtzeit-Systems, eine modulare speicherprogrammierbare Steuerung oder eine ähnliche Steuerungseinrichtung ausgebildet und eingerichtet sein.

Die vermittels der Sicherheits-Steuereinrichtung steuerbare Anlage beziehungsweise das steuerbare Gerät kann beispielsweise als eine Produktionsanlage, eine Werkzeugmaschine, ein Roboter, ein autonomes Transportsystem und/oder eine ähnliche Einrichtung, Vorrichtung oder Anlage ausgebildet und eingerichtet sein. Beispielsweise kann das Gerät beziehungsweise die Anlage für die Fertigungsindustrie, die Prozessindustrie, die Gebäudeautomatisierung und/oder auch die Energieerzeugung und -verteilung, für ein Verkehrssicherungssystem und/oder eine Verkehrssteuerung ausgebildet oder vorgesehen sein.

Das Steuerungs-Grundgerät kann beispielsweise einem Steuerungsgerät beziehungsweise einem Controller ohne oder mit teilweiser Sicherheitsfunktionalität oder auch vollständiger Sicherheitsfunktion entsprechen. Ein solches Steuerungsgerät kann beispielsweise als Zentraleinheit einer speicherprogrammierbaren Steuerung, als speicherprogrammierbare Steuerung, als Industrie PC, als PC oder ähnliche Einrichtung ausgebildet und eingerichtet sein.

Dabei kann das Steuerungs-Grundgerät beispielsweise ein Echtzeit-Betriebssystem umfassen, welches eine Echtzeit-Steuerung eines mit dem Grundgerät verbundenen oder verbindbaren Geräts beziehungsweise einer damit verbundenen oder verbindbaren Anlage ermöglicht.

Das Steuerungs-Grundgerät und/oder das Sicherheitsmodul können beispielsweise ein Gehäuse umfassen. Das Gehäuse kann derart ausgebildet sein, dass das Steuerungs-Grundgerät und/oder das Sicherheitsmodul vor Umwelteinflüssen geschützt werden. Beispielsweise können derartige Gehäuse gemäß der "International Protection"-Klassifikation gemäß DIN 60529, DIN 40050-9 und/oder ISO 20653 ausgebildet und eingerichtet sein, z.B. gemäß den Klassen IP65 oder IP67.

Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) verstanden. Die kryptografische Funktionalität des Sicherheitsmoduls kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Signatur)
- Prüfen einer kryptografischen Prüfsumme (z.B. Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. tamper-Schutz, Systemintegrität, SIEM)
- Überwachen oder Überwachung von Daten
- Validierung von Daten
- Filterung von Daten

Die aufgezählten kryptografischen Funktionalitäten können dabei jeweils wieder mit verschiedenen Verfahren oder Kombinationen von Verfahren ausgeführt sein.

Die Datenschnittstelle zwischen dem Sicherheitsmodul und dem Steuerungs-Grundgerät kann beispielsweise eine drahtgebundene oder drahtlose Schnittstelle sein. Dabei kann die Datenverbindung über eine drahtgebundene Schnittstelle beispielsweise über eine Kombination von entsprechend komplementären Steckverbinder-Komponenten oder auch über entsprechende Kontaktflächen oder -stifte erfolgen. Dabei kann die Datenschnittstelle als eine serielle oder parallele Datenschnittstelle ausgebildet und eingerichtet sein. Weiterhin kann die Datenschnittstelle zwischen Sicherheitsmodul und Steuerungs-Grundgerät auch als Drahtlos-Schnittstelle, z.B. eine WLAN-, eine Bluetooth- oder eine NFC-Schnittstelle (NFC: Near Field Communication) ausgebildet und eingerichtet sein.

Die Abfrage einer Identität und/oder Authentizität des Sicherheitsmoduls kann beispielsweise die Abfrage einer Informationen bezüglich eines Modells, eines Herstellers, eines Autors, eines oder mehrerer implementierter oder implementierbarer Krypto-Verfahren und/oder - Funktionalitäten, eine Versions-Information, ein Firmware-Stand oder ähnliche Informationen, beziehungsweise die Abfrage von deren Authentizität, umfassen. Weiterhin kann die Abfrage einer Identität und/oder Authentizität des Sicherheitsmoduls beispielsweise die Abfrage von Identitäts-Informationen, wie beispielsweise einer Typ-Information, einer Modell-Identifikation, einer Identifikations-Nummer oder -Kennung oder Ähnlichem, und/oder der Authentizität solcher Informationen umfassen.

Weiterhin kann das Sicherheitsmodul zudem auch mechanisch mit dem Steuerungs-Grundgerät verbunden sein, insbesondere lösbar mit dem Steuerungs-Grundgerät verbunden sein. Derartige Verbindungen können beispielsweise über entsprechende Verrastungen, Verklemmungen, Verschraubungen oder beliebige Kombinationen davon erfolgen.

Zudem kann vorgesehen sein, dass die Energieversorgung des Sicherheitsmoduls über das Steuerungs-Grundgerät erfolgt, beispielsweise über die Datenschnittstelle oder auch über eine gesonderte Schnittstelle zur Energieversorgung. Die Energieversorgung des Sicherheitsmoduls kann auch über eine gesonderte Zuführung erfolgen. Das Sicherheitsmodul kann auch eine eigene Energiequelle umfassen, wie beispielsweise eine Batterie, ein wiederaufladbarerer Akku, ein Kondensator und/oder eine vergleichbare Energiequelle.

Die Sicherheitsfunktion der Sicherheits-Steuereinrichtung kann beispielsweise jede Funktion zur Verschlüsselung, zum Schutz der Vertraulichkeit, zum Integritätsschutz, zur Authentifikation von Daten und/oder Ähnlichem bestehen. Daten können dabei z.B. Nutzerdaten, Steuerdaten, Konfigurationsdaten und/oder administrative Daten sein.

Dabei wird die jeweilige Sicherheitsfunktion der Sicherheits-Steuereinrichtung durch ein Zusammenwirken von Steuerungs-Grundgerät und Sicherheitsmodul erreicht. Ein solches Zusammenwirken kann beispielsweise die Abfrage von Sicherheitsfunktionalitäten durch das Steuerungs-Grundgerät, z.B. das Auslesen eines Schlüssels oder Abfragen eines entsprechenden Prüf-Ergebnisses bestehen. Weiterhin kann das Zusammenwirken auch aus einer Kombination eines im Steuerungs-Grundgerät bereits vorgesehenen Sicherheits- oder kryptografischen-Verfahrens mit der kryptografischen Funktionalität des Sicherheitsmoduls bestehen.

Ganz allgemein wird unter dem Zusammenwirken von Sicherheitsmodul und Steuerungs-Grundgerät zum Erreichen der Sicherheitsfunktion ein Vorgehen verstanden, bei welchem beide der genannten Komponenten mitwirken. Dabei kann eine Mitwirkung im Rahmen des genannten Zusammenwirkens auch schon aus einem Abfragen oder Übertragen einer Information bestehen. Alternativ kann eine Mitwirkung im Rahmen des genannten Zusammenwirkens auch derart ausgestaltet sein, dass sowohl das Steuerungs-Grundgerät als auch das Sicherheitsmodul einen bezüglich des Sicherheits-Aspektes funktionalen Beitrag zum Erreichen der Sicherheitsfunktion der Sicherheits-Steuereinrichtung leisten.

Weiterhin kann zum Erreichen der Sicherheitsfunktion vorgesehen sein, dass weitere Komponenten mit dem Steuerungs-Grundgerät und/oder dem Sicherheitsmodul zusammenwirken. Derartige Komponenten können beispielsweise ein oder mehrere weitere Sicherheitsmodule oder auch ein oder mehrere weitere Applikationen im Steuerungs-Grundgerät oder einem externen Gerät zum Erreichen der Sicherheitsfunktion sein.

In einer vorteilhaften Ausgestaltung ist das Sicherheitsmodul lösbar mit dem Steuerungs-Grundgerät verbunden. Auf diese Weise werden die Sicherheitseigenschaften der Sicherheits-Steuerungseinrichtung weiter verbessert, da durch ein lösbar mit dem Steuerungs-Grundgerät verbundenes Sicherheitsmodul das Austauschen eines solchen Sicherheitsmoduls gegen ein weiteres Sicherheitsmodul ermöglicht wird. So lassen sich z.B. Sicherheitseigenschaften der Sicherheits-Steuerungseinrichtung flexibel ändern und/oder anpassen, um das Gerät beispielsweise an veränderte Randbedingungen anzupassen oder auch neue, u.U. verbesserte Sicherheitsverfahren zu implementieren.

Unter einer lösbaren Verbindung wird in diesem Zusammenhang eine solche verstanden, welche während eines normalen, fach-üblichen Gebrauchs der Sicherheits-Steuereinrichtung fixiert bleibt, und nur bei Ergreifung spezieller Maßnahmen zur Lösung der Verbindung oder unüblicher Gewalt gelöst wird. Eine solche lösbare Verbindung kann beispielsweise unter Anderem eine lösbare mechanische Verbindung des Sicherheitsmoduls mit dem Steuerungs-Grundgerät sein, welche z.B. als Verrastung, Verschraubung oder Ähnliches ausgebildet sein kann. Weiterhin kann bei einer drahtgebundenen Datenschnittstelle zwischen Sicherheitsmodul und Steuerungs-Grundgerät eine lösbare Verbindung zwischen diesen Komponenten eine Verbindung mittels entsprechender Steck-Elemente und/oder Kontakt-Elemente zum Herstellen und Lösen einer entsprechenden Datenverbindung umfassen. Eine derartige drahtgebundene Datenverbindung kann beispielsweise über spezielle Sicherheitsmaßnahmen, wie beispielsweise eine zusätzliche Verrastung oder Verschraubung noch zusätzlich gesichert sein.

Das Steuerungs-Grundgerät kann derart ausgebildet und eingerichtet sein, dass bei einem gelösten Sicherheitsmodul das Steuerungs-Grundgerät mit einer Grundgeräte-Funktionalität betreibbar ist oder betrieben wird. Dabei wird unter einem gelösten Sicherheitsmodul ein solches verstanden, welches zumindest keine Kommunikationsverbindung mehr mit dem Steuerungs-Grundgerät aufweist.

Auf diese Weise wird die Sicherheitsfunktionalität der Sicherheits-Steuerungseinrichtung weiter flexibilisiert, indem, beispielsweise in einer vertrauenswürdigen Umgebung, eine Grundgeräte-Funktionalität auch ohne zusätzliches Sicherheitsmodul zur Verfügung steht.

Dabei kann eine Grundgeräte-Funktionalität beispielsweise die vollständige Funktionalität eines Controllers oder einer speicherprogrammierbaren Steuerung, beispielsweise auch einer Zentraleinheit einer speicherprogrammierbaren Steuerung, umfassen. Weiterhin kann die Grundgeräte-Funktionalität auch bereits eingeschränkte Sicherheitsfunktionen oder auch vollständige Sicherheitsfunktionen umfassen. Die Grundgeräte-Funktionalität kann beispielsweise derart vorgesehen sein, dass dadurch zumindest eine Steuerung der zu steuernden Anlage beziehungsweise des zu steuernden Geräts in einem herkömmlichen Umfang sichergestellt ist.

Weiterhin kann das Steuerungs-Grundgerät zum Zusammenwirken mit einem gegen das Sicherheitsmodul austauschbaren zweiten Sicherheitsmodul mit einer zweiten kryptografischen Funktionalität zum Erreichen der Sicherheitsfunktion und/oder einer weiteren Sicherheitsfunktion der Sicherheits-Steuereinrichtung ausgebildet und eingerichtet sein. Auf diese Weise werden die Sicherheitseigenschaften der Sicherheits-Steuerungseinrichtungen weiter verbessert, indem z.B. die Verwendung verschiedener Sicherheitstechnologien flexibel ermöglicht wird oder auch ein Sicherheitsmodul einfach ausgetauscht bzw. auch durch ein verbessertes ersetzt werden kann.

Dabei kann das zweite Sicherheitsmodul entsprechend einem Sicherheitsmodul gemäß der vorliegenden Beschreibung ausgebildet und eingerichtet sein. Insbesondere kann es in Form und Schnittstellen-Geometrie derart ausgebildet sein, dass es anstelle des Sicherheitsmoduls mit dem Steuerungs-Grundgerät verbunden und/oder an oder in diesem angebracht oder eingebracht werden kann.

Die Verbindung des zweiten Sicherheitsmoduls mit dem Steuerungs-Grundgerät kann wiederum über die Datenschnittstelle oder auch eine weitere Datenschnittstelle erfolgen. Dabei kann die kryptografische Funktionalität des zweiten Sicherheitsmoduls vergleichbar mit der des Sicherheitsmoduls ausgebildet sein und beispielsweise wiederum zum Erreichen der Sicherheitsfunktion der Sicherheits-Steuerungseinrichtung führen. Weiterhin kann die zweite kryptografische Funktionalität auch derart verschieden von der kryptografischen Funktionalität des Sicherheitsmoduls sein, dass sich eine von der Sicherheitsfunktion verschiedene weitere Sicherheitsfunktion der Sicherheits-Steuereinrichtung ergibt beziehungsweis eine solche weitere Sicherheitsfunktion möglich wird.

Das Steuerungs-Grundgerät kann beispielsweise ein Gehäuse umfassen, wobei im Gehäuse eine Ausnehmung zur zumindest teilweisen Aufnahme des Sicherheitsmoduls ausgebildet und eingerichtet ist. Weiterhin ist im Steuerungs-Grundgerät ein Schnittstellen-Verbindungselement für die Datenschnittstelle derart vorgesehen, dass beim in der Ausnehmung aufgenommenen Sicherheitsmodul ein Datenaustausch zwischen Steuerungs-Grundgerät und Sicherheitsmodul erfolgt oder erfolgen kann. Auf diese Weise wird die Handhabung, und insbesondere eine sichere Handhabung, der Sicherheits-Steuerungseinrichtung erleichtert, da so eine versehentliche Fehlbedienung des Sicherheitsmoduls beziehungsweise der gesamten Steuerungseinrichtung erschwert wird. Dabei kann das Gehäuse bereits wie vorstehen beschrieben ausgebildet und eingerichtet sein, beispielsweise gemäß einer "International Protection"-Klassifikation.

Die Ausnehmung kann beispielsweise als eine Öffnung im Gehäuse oder ein entsprechender Schacht zur teilweisen Aufnahme oder auch gesamten Aufnahme des Sicherheitsmoduls ausgebildet und eingerichtet sein. Insbesondere kann weiterhin insbesondere eine Abdeckung vorgesehen sein, welche das Sicherheitsmodul oder/und die entsprechenden Schnittstellenelemente vor Umgebungseinflüssen und/oder auch Fehlbedienung und versehentlichem Herausnehmen oder Beschädigen schützt. Weiterhin kann die Ausnehmung auch zur Aufnahme von mehreren entsprechenden Sicherheitsmodulen ausgebildet und eingerichtet sein. Schnittstellen-Verbindungselemente können beispielsweise als entsprechende Steckverbinder-Elemente, Kontakt-Elemente oder auch Antennen für eine Drahtlos-Schnittstelle ausgebildet sein.

Bei der Sicherheits-Steuerungseinrichtung kann eine Sicherung derart vorgesehen und eingerichtet sein, dass in einem gesicherten Zustand der Sicherheits-Steuerungseinrichtung eine Auftrennung und/oder ein Abhören der Datenverbindung zwischen Steuerungs-Grundgerät und Sicherheitsmodul verhindert oder erschwert wird, insbesondere, dass in dem gesicherten Zustand das Sicherheitsmodul weiterhin relativ zum Steuerungs-Grundgerät fixiert ist.

Durch eine derartige Sicherung werden die Sicherheitseigenschaften der Sicherheits-Steuerungseinrichtung weiter verbessert, da auf diese Weise ein Stören der Sicherheitsfunktionalität, beispielsweise durch ein Trennen der Datenverbindung zwischen Steuerungs-Grundgerät und Sicherheitsmodul, verhindert oder erschwert wird. Eine derartige Sicherung kann beispielsweise eine mechanische Sicherung umfassen, z.B. eine Verriegelung, eine Verrastung, eine Verschraubung, eine Schrauben-Sicherung, ein mechanisches Schloss, eine Versiegelung, eine Verplombung oder Ähnliches. Dabei kann beispielsweise das gesamte Sicherheitsmodul entsprechend mit dem Steuerungs-Grundgerät gesichert werden. Weiterhin kann auch eine Auftrennung der Datenverbindung zwischen Sicherheitsmodul und Steuerungs-Grundgerät entsprechend gesichert sein.

Eine Sicherung kann weiterhin auch derart ausgebildet und eingerichtet sein, dass ein Abhören oder Abgreifen von Informationen aus dem Sicherheitsmodul, aus dem Steuerungs-Grundgerät oder aus dem Bereich der Datenverbindung zwischen Sicherheitsmodul und Steuerungs-Grundgerät verhindert oder erschwert wird, z.B.durch entsprechende, beispielsweise mechanische, elektrische und/oder datentechnische Maßnahmen. Derartige mechanische Sicherungen können beispielsweise entsprechende Abschirmungen, Ummantelungen oder sonstige mechanische Schutzmaßnahmen sein. Entsprechende elektrische Sicherungen können beispielsweise Sensoren oder entsprechende Sicherungsschalter umfassen, welche eine elektrische Kontaktierung der genannten Elemente beziehungsweise Verbindungen detektieren und/oder melden können.

Auch dies erhöht die Sicherheitseigenschaften der Sicherheits-Steuerungseinrichtung, da auf diese Weise insbesondere ein illegaler und/oder unauthorisierter Zugriff auf die Sicherheits-Steuerungseinrichtung und insbesondere auch die dort vorgesehenen Sicherheitsmaßnahmen verhindert oder zumindest erschwert werden kann.

Weiterhin kann vorgesehen sein, dass über die Datenschnittstelle Identifikations-Informationen des Sicherheitsmoduls zum Steuerungs-Grundgerät übertragen und im Steuerungs-Grundgerät gespeichert werden. Es kann auch vorgesehen sein, dass über die Datenschnittstelle Identifikations-Informationen des Steuerungs-Grundgeräts zum Sicherheitsmodul übertragen und im Sicherheitsmodul gespeichert werden.

Durch eine Übertragung entsprechender Identifikations-Informationen wird beispielsweise eine Identifikation des jeweils anderen Partners ermöglicht, und so beispielsweise eine Überprüfung einer Identität und/oder Authentizität eines jeweils angeschlossenen Partners. Auf diese Weise kann z.B. sichergestellt werden, dass nur zugelassene, erlaubte, geeignete oder entsprechend authorisierte Sicherheitsmodule beziehungsweise Steuerungs-Grundgeräte mit der jeweils anderen Komponente kombiniert werden beziehungsweise kombinierbar sind. Auch auf diese Weise lassen sich die Sicherheitseigenschaften einer entsprechenden Einrichtung weiter verbessern.

Identifikations-Informationen können dabei Informationen bezüglich eines Modells, eines Herstellers, eines oder mehrerer implementierter oder implementierbarer Krypto-Verfahren und/oder -Funktionalitäten, eine Versions-Information, ein Firmware-Stand oder ähnliche Informationen umfassen. Die Übertragung entsprechender Identifikations-Informationen vom Sicherheitsmodul zum Steuerungs-Grundgerät kann beispielsweise auf Anforderung des Grundgeräts erfolgen. Entsprechend kann die Übertragung entsprechender Identifikations-Informationen vom Steuerungs-Grundgerät zum Sicherheitsmodul beispielsweise auf Anforderung des Sicherheitsmoduls erfolgen. Dies kann beispielsweise im Rahmen eines Authentifizierungsvorgangs bei einem neu verbundenen Sicherheitsmodul oder auch als regelmäßiger Status-Überprüfungs-Authentifizierungsvorgang geschehen.

Die Speicherung der entsprechenden Identifikations-Informationen kann beispielsweise temporär oder auch permanent erfolgen. Beispielsweise kann die Speicherung auch permanent im Rahmen einer entsprechenden Liste oder Datenbank oder eines entsprechenden Audit-Trails erfolgen. Dies ermöglicht es beispielsweise nachzuvollziehen, wann z.B. welche Sicherheitsmodule mit einem entsprechenden Steuerungs-Grundgerät verbunden waren. Auch auf diese Weise lassen sich die Sicherheitseigenschaften einer entsprechenden Steuerungseinrichtung weiter verbessern.

Das Steuerungs-Grundgerät und/oder Sicherheitsmodul können weiterhin derart ausgebildet und eingerichtet sein, dass eine Auftrennung und/oder ein Abhören der Datenverbindung zwischen Steuerungs-Grundgerät und Sicherheitsmodul erkannt, erfasst und/oder protokolliert wird oder werden kann.

Dafür können beispielsweise entsprechende Sensoren oder Prüf-Einrichtungen vorgesehen sein. Wird durch eine solche Prüfeinrichtung beispielsweise erkannt, dass eine Kommunikationsverbindung zwischen Steuerungs-Grundgerät und Sicherheitsmodul unterbrochen oder getrennt ist, so kann dies beispielsweise in einer entsprechenden Datenbank erfasst und protokolliert werden z.B. inklusive eines Zeitpunkts der Erfassung sowie weiteren Informationen. Solche weiteren Informationen können beispielsweise Informationen bezüglich der Steuerung der angeschlossenen Anlage beziehungsweise des angeschlossenen Geräts und einem entsprechenden Geräte- und Maschinenzustand sein. Wird durch eine entsprechende Abhör-Sicherungseinrichtung das Abhören einer Datenverbindung innerhalb des Sicherheitsmoduls, des Steuerungs-Grundgeräts oder zwischen diesen beiden erkannt, so kann dies ebenfalls entsprechend erfasst und z.B. gemeinsam mit einem Erfassungszeitpunkt und weiteren Informationen in einer entsprechenden Liste oder Datenbank protokolliert werden.

Weiterhin kann vorgesehen sein, dass nach einem solchen Erkennen, Erfassung und/oder Protokollieren einer Auftrennung und/oder eine Abhörens der Datenverbindung zwischen Steuerungs-Grundgerät und Sicherheitsmodul eine sicherheitsrelevante Aktion ausgelöst wird.

Dabei kann eine derartige sicherheitsrelevante Aktion beispielsweise jede Aktion sein, die eine Sicherheitsfunktion der modularen Sicherheits-Steuerungseinrichtung betrifft, beispielsweise ein entsprechendes Alarmsignal, eine entsprechende Alarm-Nachricht, ein Löschen von Schlüsseln, eine Sperrung von Funktionalitäten oder weitere vergleichbare und/oder ergänzende Aktionen.

Das Steuerungs-Grundgerät kann auch zur Prüfung einer Identität und/oder einer Authentizität eines über die Datenschnittstelle verbundenen Sicherheitsmoduls ausgebildet und eingerichtet sein, wobei Sicherheits-Grundgerät, Sicherheitsmodul und Datenschnittstelle gemäß der vorliegenden Beschreibung ausgebildet und eingerichtet sein können.

Dabei kann beispielsweise die Abprüfung von Identitäts-Informationen, wie beispielsweise einer Typ-Information, einer Modell-Identifikation, einer Identifikations-Nummer oder -Kennung oder Ähnlichem, und/oder der Authentizität solcher Informationen erfolgen. Weiterhin kann beispielsweise nach erfolgloser Prüfung einer Identität oder Authentizität eine sicherheitsrelevante Aktion gemäß der vorliegenden Beschreibung ausgelöst werden.

Auch das Sicherheitsmodul kann zur Prüfung einer Identität und/oder Authentizität eines über die Datenschnittstelle verbundenen Steuerungs-Grundgeräts gemäß der vorliegenden Beschreibung ausgebildet und eingerichtet sein. Auch hier kann bei misslungener Prüfung der Identität und/oder Authentizität eine entsprechende sicherheitsrelevante Aktion gemäß der vorliegenden Beschreibung veranlasst oder ausgelöst werden.

Auf diese Weise wird eine verbesserte Sicherheit des Systems erreicht, indem durch die genannte Abprüfung von Identitäts- und/oder Authentizitäts-Informationen mit erhöhter Sicherheit nur zur entsprechenden Verwendung vorgesehene Komponenten eingesetzt werden bzw. werden können und so beispielsweise entsprechend vorgesehene Sicherheitsstandards eingehalten werden können.

Das Steuerungs-Grundgerät kann weiterhin beispielsweise einen Datenbus zum Datenaustausch mit einer externen Einrichtung umfassen, wobei die Datenschnittstelle zum Sicherheitsmodul innerhalb des Steuerungs-Grundgeräts derart ausgebildet und angeordnet ist, dass zwischen dem Steuerungs-Grundgerät und der externen Einrichtung über den Datenbus ausgetauschte Daten durch das Sicherheitsmodul hindurchgeführt werden oder hindurchgeführt werden können.

Auf diese Weise können beispielsweise Sicherheitsmodule vorteilhaft verwendet werden, welche z.B. für eine anwenderspezifische oder austauschbare Datenerkennung oder Modifikation, beispielsweise eine Verschlüsselung oder eine sonstige kryptografische Aktionen, eingerichtet sind, wobei diese unmittelbar auf zur externen Einrichtung übertragene oder von dieser kommende Daten anwendbar sind. Auf diese Weise können z.B. flexibel entsprechende Verschlüsselungsmodule in einer entsprechenden Sicherheits-Steuerungseinrichtung implementiert werden.

Externe Einrichtungen können beispielsweise Eingabe- und/oder Ausgabemodule einer speicherprogrammierbaren Steuerung, ein gesteuertes Gerät oder eine gesteuerte Anlage, eine weitere Steuerung, eine Bedieneinrichtung (z.B. ein sogenanntes HMI: "Human Machine Interface"), ein Bedienen- und Beobachten-System (z.B. ein sogenanntes "SCADA"-System), ein Programmiergerät, ein Engineering-System oder ähnliche Systeme sein. Auf diese Weise lässt sich beispielsweise die Kommunikation mit derartigen Systemen sicherer gestalten und weiterhin auch der Grad und die Methode der angewendeten Sicherheitsverfahren flexibel an die Systeme und bestimmte Umwelt oder Umgebungsbedingungen anpassen.

Dabei kann das Steuerungs-Grundgerät einen Datenbus oder auch mehrere Datenbusse umfassen. Es kann weiterhin vorgesehen sein, dass die Kommunikation nur eines Datenbusses, mehrerer der Datenbusse oder auch aller Datenbusse eines entsprechenden Steuerungs-Grundgeräts über das entsprechende Sicherheitsmodul geführt wird.

Es kann auch vorgesehen sein, dass das Steuerungs-Grundgerät einen Datenbus zum Datenaustausch mit einer externen Einrichtung umfasst, und dass die Datenschnittstelle zum Sicherheitsmodul innerhalb des Steuerungs-Grundgeräts derart ausgebildet und angeordnet ist, dass zwischen dem Steuerungs-Grundgerät und der externen Einrichtung über den Datenbus ausgetauschte Daten nicht durch das Sicherheitsmodul hindurchgeführt werden.

Eine derartige Ausgestaltung eignet sich beispielsweise für Sicherheitsmodule, welche nicht der unmittelbar auf zu übertragene Daten wirkende Sicherheitsmechanismen implementiert haben, sondern entsprechende weitere Sicherheitsmechanismen zur Verfügung stellen. Dies kann beispielsweise eine Funktionalität eines Schlüsselmanagements, der Authentizierung eines Nutzers oder spezieller Daten, die Erzeugung von Zufallszahlen oder Ähnliches umfassen. Weiterhin eignet sich eine derartige Ausgestaltung z.B. auch für Sicherheitsmodule, welche eine eigene Schnittstelle zur Kommunikation mit einer oder mehreren externen Einrichtungen aufweisen.

Auch hier kann vorgesehen sein, dass das Steuerungs-Grundgerät mehrere Datenbusse umfasst, wobei nur ein Datenbus nicht durch das Sicherheitsmodul hindurchgeführt wird, mehrere der Datenbusse nicht durch das Sicherheitsmodul hindurchgeführt werden oder keiner der Datenbusse durch das Sicherheitsmodul hindurchgeführt werden.

So ist es beispielsweise möglich, dass bei zwei im Steuerungs-Grundgerät vorgesehenen Datenbussen einer der Datenbusse durch das Sicherheitsmodul hindurchgeführt wird, während ein anderer Datenbus nicht durch das Sicherheitsmodul hindurchgeführt wird. Auf diese Weise lässt sich beispielsweise eine Kommunikation aus einer gesicherten Umgebung heraus sicherheitstechnisch schützen, beispielsweise verschlüsseln oder überwachen, während eines Kommunikation innerhalb einer gesicherten Zone, beispielsweise über einen Feldbus in einem Automatisierungssystem, ungesichert erfolgen kann.

In einer weiteren vorteilhaften Ausgestaltung kann das Sicherheitsmodul eine eigene externe Modulschnittstelle zur Kommunikation mit einer oder mehreren Externen Einrichtungen umfassen. Über diese Schnittstelle kann das Sicherheitsmodul beispielsweise unmittelbar mit einer oder mehreren anderen Steuerungseinrichtungen, einem oder mehreren Computern (z.B. mit einem Engineering-System oder einem SCADA-System), einem oder mehreren Feldgeräten, einem oder mehreren anderen Sicherheitsmodulen (z.B. gemäß der vorliegenden Beschreibung) verbunden werden oder verbunden sein.

Dabei kann die Schnittstelle beispielsweise als eine Feldbus-Schnittstelle, eine Ethernet-Schnittstelle, eine Internet-Schnittstelle oder als eine vergleichbare Kommunikations-Schnittstelle ausgebildet und eingerichtet sein. Damit wäre es z.B. möglich, eine Sicherheits-Steuerungseinrichtung gemäß der vorliegenden Beschreibung z.B. an vorhandene, unterschiedliche und/oder kundenspezifische Sicherheitsprotokolle auf einer Feldbusschnittstelle eines Automatisierungssystems anzupassen.

Das Steuerungs-Grundgerät kann zudem eine Erkennungseinrichtung umfassen, welche derart ausgebildet und eingerichtet sein kann, dass vermittels der Erkennungseinrichtung feststellbar ist, ob ein Sicherheitsmodul über die Datenschnittstelle mit dem Steuerungs-Grundgerät verbunden ist oder nicht.

Eine solche Erkennungseinrichtung kann beispielsweise als gesonderte Softwareapplikation oder auch Hardware-Baugruppe ausgebildet und eingerichtet sein, oder auch beispielsweise als Teil des Betriebssystems oder einer "Firmware" des Steuerungs-Grundgeräts. Die Erkennungseinrichtung kann auch weiterhin so ausgebildet und eingerichtet sein, dass sie zur Abfrage von Identifikations-Informationen des Sicherheitsmoduls sowie deren Speicherung und gegebenenfalls auch Prüfung eingerichtet und ausgebildet ist. Weiterhin kann sie auch zur Authentifizierung beziehungsweise Authentizitätsprüfung eines angeschlossenen Sicherheitsmoduls ausgebildet und eingerichtet sein.

Diesbezüglich kann weiterhin vorgesehen sein, dass das Steuerungs-Grundgerät derart ausgebildet und eingerichtet ist, dass zumindest eine Funktionalität des Steuerungs-Grundgeräts verhindert wird, wenn durch die Erkennungseinrichtung kein über die Datenschnittstelle verbundenes Sicherheitsmodul erkannt wird. Auf diese Weise kann beispielsweise erreicht werden, dass bestimmte Funktionalitäten des Steuerungs-Grundgeräts nur dann verfügbar sind, wenn ein entsprechendes Sicherheitsmodul mit dem Grundgerät verbunden ist.

Weiterhin kann auch vorgesehen sein, dass wesentliche Teile oder die gesamte Steuerungs-Funktionalität des Steuerungs-Grundgeräts verhindert oder gestoppt werden, wenn durch die Erkennungseinrichtung kein über die Datenschnittstelle verbundenes Sicherheitsmodul erkannt wird.

Das Steuerungs-Grundgerät kann weiterhin derart ausgebildet und eingerichtet sein, dass, wenn durch die Erkennungseinrichtung kein über die Datenschnittstelle verbundenes Sicherheitsmodul erkannt wird, eine im Steuerungs-Grundgerät vorgesehene eigene Grundgeräte-Kryptofunktionalität statt einer kryptografischen Funktionalität eines Sicherheitsmoduls verwendet wird.

Auf diese Weise kann beispielsweise eine sichere Grundfunktionalität des Steuerungs-Grundgeräts oder eine Mindest-Sicherheit dieses Geräts erreicht werden, indem, wenn kein Sicherheitsmodul mit dem Steuerungs-Grundgerät verbunden ist, eine in diesem implementierte eigene Kryptofunktionalität verwendet wird. Dabei kann die eigene Grundgeräte-Kryptofunktionalität entsprechend einer kryptografischen Funktionalität eines Sicherheitsmoduls gemäß der vorliegenden Beschreibung ausgebildet und eingerichtet sein.

Dabei kann ein wie vorstehend erläutert ausgebildetes Steuerungs-Grundgerät weiterhin so ausgestaltet und eingerichtet sein, dass eine kryptografische Funktionalität eines verbundenen Sicherheitsmoduls anstatt der eigenen Grundgeräte-Kryptofunktionalität oder auch in Kombination mit der eigenen Grundgeräte-Kryptofunktionalität verwendet wird, wenn durch die Erkennungseinrichtung ein über die Datenschnittstelle verbundenes Sicherheitsmodul erkannt wird.

Auf diese Weise kann erreicht werden, dass beispielsweise bei einem Verwenden eines Sicherheitsmoduls mit dem Steuerungs-Grundgerät, dann tatsächlich auch die Funktionalität des Sicherheitsmoduls genützt wird. So lässt sich eine entsprechende Sicherheits-Steuerungseinrichtung flexibel einrichten, indem beispielsweise eine im Grundgerät vorgesehene eigene Grundgeräte-Kryptofunktionalität als Basis-Funktionalität vorgesehen ist und über entsprechende Sicherheitsmodule, beispielsweise erweiterte, verbesserte oder zusätzliche Sicherheitsfunktionalitäten hinzugefügt werden können.

In einer weiteren vorteilhaften Ausgestaltung kann vorgesehen sein, dass die modulare Sicherheits-Steuereinrichtung ein weiteres Sicherheitsmodul umfasst, welches zur Bereitstellung oder Ausführung einer weiteren kryptografischen Funktionalität für das Steuerungs-Grundgerät ausgebildet und eingerichtet ist, wobei das weitere Sicherheitsmodul vermittels einer weiteren Datenverbindung über eine weitere Datenschnittstelle mit dem Steuerungs-Grundgerät verbunden ist.

Weiterhin können auch noch zusätzliche Sicherheitsmodule entsprechend dem weiteren Sicherheitsmodul vorgesehen sein.

Das weitere Sicherheitsmodul umfasst z.B. eine weitere kryptografische Funktionalität, welche entsprechend der kryptografischen Funktionalität des Sicherheitsmoduls gemäß der vorliegenden Beschreibung ausgebildet und eingerichtet sein kann. Die weitere kryptografische Funktionalität kann beispielsweise die kryptografische Funktionalität des Sicherheitsmoduls ergänzen oder dem Steuerungs-Grundgerät eine zusätzliche Funktionalität zur Verfügung stellen. Weiterhin kann die weitere kryptografische Funktionalität auch der kryptografischen Funktionalität des Sicherheitsmoduls entsprechen.

Als sich ergänzende kryptografische Funktionalitäten des Sicherheitsmoduls und des weiteren Sicherheitsmoduls kann beispielsweise vorgesehen sein, dass die kryptografische Funktionalität des Sicherheitsmoduls ein Management von Schlüsseln umfasst, während die weitere kryptografische Funktionalität des weiteren Sicherheitsmoduls eine Verschlüsselung von Daten umfasst. Auf diese Weise können die durchaus unterschiedlich zu handhabenden Mechanismen eines Schlüsselmanagements und der eigentlichen Verschlüsselung in zwei verschiedenen, sich ergänzenden Sicherheitsmodulen ausgeführt werden.

Dabei kann das weitere Sicherheitsmodul wiederum entsprechend eines Sicherheitsmoduls gemäß der vorliegenden Beschreibung ausgebildet und eingerichtet sein. Insbesondere kann das weitere Sicherheitsmodul beispielsweise lösbar mit dem Steuerungs-Grundgerät verbunden sein, wobei diese lösbare Verbindung ebenfalls wieder gemäß der vorliegenden Beschreibung ausgebildet sein kann. Weiterhin kann das weitere Sicherheitsmodul auch beispielsweise fest mit dem Steuerungs-Grundgerät verbunden beziehungsweise fest in dieses integriert sein. Das weitere Sicherheitsmodul kann beispielsweise auch als von einem Anwender beziehungsweise Kunden programmierbare oder konfigurierbare Elektronik beziehungsweise "Hardware" vorgesehen sein, z.B. als ein sogenanntes "Field Programmable Gate Array" (FPGA) ausgebildet und eingerichtet sein.

Über ein solches FPGA kann ein Anwender beispielsweise dauerhaft seine eigenen Sicherheits-Mechanismen in einer entsprechenden Sicherheits-Steuereinrichtung implementieren. Auf diese Weise lassen sich die Sicherheitseigenschaften eines derartigen Systems weiter verbessern, da ein Anwender seine eigenen und nur ihm bekannten Sicherheits-Mechanismen verwenden kann und so eine erhöhte Sicherheit eines solchen Systems erreicht werden kann.

Die weitere Datenschnittstelle kann entsprechend einer Datenschnittstelle gemäß der vorliegenden Beschreibung weiter ausgebildet und eingerichtet sein. Insbesondere kann diese wiederum als drahtgebundene und/oder drahtlose Schnittstelle vorgesehen sein. Dabei kann die weitere Datenschnittstelle der Datenschnittstelle zum Sicherheitsmodul entsprechen oder auch als ein anderer Schnittstellen-Typus oder eine andere Schnittstellen-Modifikation ausgebildet sein.

Eine Sicherheits-Steuerungseinrichtung mit einem Sicherheitsmodul und einer weiteren Sicherheitsmodul kann weiterhin derart ausgebildet sein, dass das Steuerungs-Grundgerät zum Zusammenwirken mit dem weiteren Sicherheitsmodul zum Erreichen einer weiteren Sicherheitsfunktion der Sicherheits-Steuerungseinrichtung ausgebildet und eingerichtet ist. Dabei kann die weitere Sicherheitsfunktion entsprechend einer Sicherheitsfunktion gemäß der vorliegenden Beschreibung ausgebildet und eingerichtet sein. Insbesondere kann auch das Zusammenwirken des Steuerungs-Grundgeräts mit dem weiteren Sicherheitsmodul entsprechend dem Zusammenwirken des Steuerungs-Grundgeräts mit dem Sicherheitsmodul gemäß der vorliegenden Beschreibung ausgebildet und eingerichtet sein.

Zudem kann eine Sicherheits-Steuerungseinrichtung mit Sicherheitsmodul und weiteren Sicherheitsmodul auch derart ausgestaltet und eingerichtet sein, dass das weitere Sicherheitsmodul zum unmittelbaren Zusammenwirken mit dem Sicherheitsmodul ausgebildet und eingerichtet ist.

Ein derartiges Zusammenwirken beider Sicherheitsmodule kann beispielsweise über die jeweilige Datenschnittstellen zum Steuerungs-Grundgerät und/oder auch über eine weitere Datenschnittstelle zur unmittelbaren Kommunikation beider Sicherheitsmodule erfolgen.

Auf diese Weise können die Module unmittelbar zusammenwirken und beispielsweise sich ergänzende oder additive Sicherheitsfunktionen gemeinsam realisieren. So kann beispielsweise durch ein solches Zusammenwirken zweier Module der Schutz des Datenaustauschs im Rahmen des Zusammenwirkens z.B. von Authentisierungs-, Integritäts- und/oder Verschlüsselungs-Funktionalitäten erreicht werden.

Eine modulare Sicherheits-Steuerungseinrichtung gemäß der vorliegenden Beschreibung kann weiterhin derart ausgebildet und eingerichtet sein, dass das Sicherheitsmodul als ein von einem Anwender programmierbarer oder konfigurierbarer Elektronikbaustein, insbesondere ein von einem Anwender fest programmierbarer oder konfigurierbarer Elektronikbaustein ausgebildet und eingerichtet ist.

Dabei kann ein derartiger Elektronikbaustein beispielsweise als ein "Hardware"-Element, beispielsweise ein integrierter Schaltkreis, oder auch als eine Elektronikbaugruppe ausgebildet und eingerichtet sein. Beispielsweise kann der Elektronikbaustein als sogenanntes "Field Programmable Gate Array" (FPGA) ausgebildet und eingerichtet sein. Dieser Elektronikbaustein kann beispielsweise fest mit dem Steuerungs-Grundmodul verbunden sein. Weiterhin kann der Elektronikbaustein auch lösbar mit dem Steuerungs-Grundmodul verbunden sein.

Auf diese Weise lässt sich die Sicherheit der Sicherheits-Steuerungseinrichtung weiter verbessern, indem ein Anwender seine eigenen, proprietären Sicherheitsmechanismen in der Steuerungseinrichtung implementieren kann und so ein besonderer Geheimhaltungsschutz der verwendeten Sicherheitsmaßnahmen möglich wird.

Die vorstehende Aufgabe wird auch gelöst von einem Verfahren zum Betrieb einer modularen Sicherheits-Steuerungseinrichtung gemäß der vorliegenden Beschreibung, wobei das Steuerungs-Grundgerät und das Sicherheitsmodul jeweils ein Schnittstellen-Verbindungselement aufweisen, über welche die Datenverbindung zwischen Steuerungs-Grundgerät und Sicherheitsmodul hergestellt ist. Das Verfahren umfasst dabei die folgenden Schritte:
- Trennen der Datenverbindung zwischen dem Steuerungs-Grundgerät und dem Sicherheitsmodul,
- Herstellen einer Datenverbindung über die Datenschnittstelle zwischen dem Steuerungs-Grundgerät und einem zweiten Sicherheitsmodul mit einer zweiten kryptografischen Funktionalität.

Dabei kann das Trennen der Datenverbindung zwischen dem Steuerungs-Grundgerät und dem Sicherheitsmodul beispielsweise durch räumliche Trennung der Schnittstellen-Verbindungselemente von Steuerungs-Grundgerät und Sicherheitsmodul erfolgen. Das Herstellen der Datenverbindung zwischen dem Steuerungs-Grundgerät und dem zweiten Sicherheitsmodul kann beispielsweise vermittels Annähern und/oder Kontaktieren eines Schnittstellen-Verbindungselements des zweiten Sicherheitsmoduls und des Schnittstellen-Verbindungselements des Steuerungs-Grundgeräts erfolgen. Dabei kann das Herstellen der Datenverbindung weiterhin auch eine nachfolgende Kommunikation zur Herstellung einer funktionierenden Datenverbindung umfassen.

Schnittstellen-Verbindungselemente von Steuerungs-Grundgerät und dem jeweiligen Sicherheitsmodul können beispielsweise entsprechend zusammenwirkende Steckerelemente, Kontaktelemente oder auch Antennen umfassen oder aus solchen bestehen. Weiterhin kann das zweite Sicherheitsmodul entsprechend einem Sicherheitsmodul gemäß der vorliegenden Beschreibung ausgebildet und eingerichtet sein.

Das Steuerungs-Grundgerät und das zweite Sicherheitsmodul können weiterhin derart ausgebildet und eingerichtet sein, dass das zweite Sicherheitsmodul anstelle des Sicherheitsmoduls am oder im Steuerungs-Grundgerät platzierbar und mit diesem verbindbar ist.

Weiterhin kann vorgesehen sein, dass nach Herstellung der Datenverbindung zwischen Steuerungs-Grundgerät und dem zweiten Sicherheitsmodul über die Datenschnittstelle Identifikations-Informationen des zweiten Sicherheitsmoduls zum Steuerungs-Grundgerät übertragen und im Steuerungs-Grundgerät gespeichert werden. Weiterhin kann auch vorgesehen sein, dass nach Herstellen der Datenverbindung zwischen Steuerungs-Grundgerät und zweitem Sicherheitsmodul über die Datenschnittstelle Identifikations-Informationen des Steuerungs-Grundgeräts zum zweiten Sicherheitsmodul übertragen und im zweiten Sicherheitsmodul gespeichert werden. Dabei kann die jeweilige Übertragung beispielsweise auf Anforderung des jeweils empfangenden Geräts erfolgen. Entsprechend kann die Übertragung auch auf Veranlassung des sendenden Geräts hin erfolgen. Die Identifikations-Informationen des zweiten Sicherheitsmoduls können entsprechend Identifikations-Informationen gemäß der vorliegenden Beschreibung ausgestaltet und eingerichtet sein.

Weiterhin kann vorgesehen sein, dass nach Herstellung der Datenverbindung zwischen Steuerungs-Grundgerät und zweitem Sicherheitsmodul das Steuerungs-Grundgerät eine Identität und/oder eine Authentizität des zweiten Sicherheitsmoduls prüft. Weiterhin kann nach Herstellung der Datenverbindung zwischen Steuerungs-Grundgerät und zweitem Sicherheitsmodul auch das zweite Sicherheitsmodul eine Identität und/oder Authentizität des Steuerungs-Grundgeräts prüfen.

In einer weiteren Ausgestaltung kann nach einer erfolglosen oder fehlerhaften Prüfung der Identität und/oder Authentizität des zweiten Sicherheitsmoduls und/oder des Steuerungs-Grundgeräts eine Sicherheitsfehler-Maßnahme ausgelöst werden.

Dabei können die Identität und/oder Authentizität der jeweiligen Geräte beziehungsweise Module beispielsweise durch Überprüfung von Identifikations-Daten dieser Module gemäß der vorliegenden Beschreibung und/oder auch der Authentizität dieser Daten erfolgen. Kann eine solche Identität und/oder Authentizität nicht erkannt oder verifiziert werden, so kann eine erfolglose oder fehlerhafte Prüfung vorliegen und eine entsprechende Sicherheitsfehler-Maßnahme ausgelöst werden. Eine solche kann beispielsweise einen Alarm, eine entsprechende Fehlermeldung und/oder das Stoppen oder Unterbinden einer, mehrerer oder sämtlicher Funktionalitäten des Steuerungs-Grundgeräts umfassen. Die Sicherheitsfehler-Maßnahme kann beispielsweise gemäß einer sicherheitsrelevanten Aktivität entsprechend der vorliegenden Beschreibung ausgebildet und eingerichtet sein.

Über ein oder mehrere Sicherheitsmodule gemäß der vorliegenden Beschreibung lassen sich beispielsweise erstmalig Kryptofunktionen für eine modulare Sicherheits-Steuerungseinrichtung gemäß der vorliegenden Beschreibung bereitstellen. Weiterhin lassen sich auf diese Weise beispielsweise auch in der Sicherheits-Steuerungseinrichtung vorhandene Kryptofunktionen ersetzen oder die dort vorhandenen Kryptofunktionen ergänzen, wobei eine solche Ergänzung vorzugsweise dergestalt erfolgen kann, dass ein Sicherheitsniveau der kombinierten Kryptofunktionen mindestens einem Sicherheitsniveau jeder einzelnen entspricht.

Die vorstehend genannte Aufgabe wird weiterhin auch gelöst von einer modularen Sicherheits-Steuerungseinrichtung zur Steuerung eines Geräts oder einer Anlage, umfassend:
- ein Steuerungs-Grundgerät, wobei das Steuerungs-Grundgerät derart ausgebildet und eingerichtet ist, dass vermittels des Ablaufs eines Steuerungsprogramms im Steuerungs-Grundgerät ein mit dem Steuerungs-Grundgerät verbindbares oder verbundenes Gerät, oder eine damit verbindbare oder verbundene Anlage, steuerbar ist oder gesteuert wird, und
- ein Sicherheitsmodul, welches zur Bereitstellung oder Ausführung einer kryptographischen Funktionalität für das Steuerungs-Grundgerät ausgebildet und eingerichtet ist,
- wobei das Sicherheitsmodul vermittels einer Datenverbindung über eine Datenschnittstelle mit dem Steuerungs-Grundgerät verbunden ist, und
- wobei das Steuerungs-Grundgerät zum Zusammenwirken mit dem Sicherheitsmodul zum Erreichen einer Sicherheitsfunktion der Sicherheits-Steuereinrichtung ausgebildet und eingerichtet ist.

Dabei können die Sicherheits-Steuerungseinrichtung, das Steuerungs-Grundgerät, das Sicherheitsmodul, die Datenschnittstelle, die Datenverbindung, die kryptographische Funktionalität und/oder die Sicherheitsfunktion weiterhin vorteilhafter Weise gemäß der vorliegenden Beschreibung ausbildet und eingerichtet sein.

Eine derartige modulare Sicherheits-Steuerungseinrichtung bietet eine verbesserte Möglichkeit beispielsweise zur Daten- oder Kommunikations-Sicherheit einer derartigen Steuerungseinrichtung, da über das zusätzliche Sicherheitsmodul beispielsweise die Möglichkeit besteht, eigene oder fremd entwickelte Sicherheits-Kryptomodule oder ähnliche Module zur Verbesserung der Sicherheitseigenschaften der Steuerungseinrichtung hinzuzufügen. Durch das Zusammenwirken der Funktionalität des Sicherheitsmoduls mit der bereits im Grundgerät implementierten Funktionalität lässt sich so flexibel und gegebenenfalls anwenderspezifisch die Sicherheit einer Steuerungseinrichtung verbessern und spezifisch und flexibel anpassen.

Weiterhin kann ein Nutzer auf diese Weise z.B. auch durch eine eigenständige Implementierung und/oder ein eigenes Einbringen der Sicherheitsfunktionalität im Rahmen der modularen Komponente die Vertrauenswürdigkeit der Sicherheitsfunktionalität erhöhen, da er so die hohe Vertrauenswürdigkeit der eigenen kontrollierbaren Umgebung ausnutzen kann und weniger bzw. nicht von der Vertrauenswürdigkeit Dritter abhängig ist.

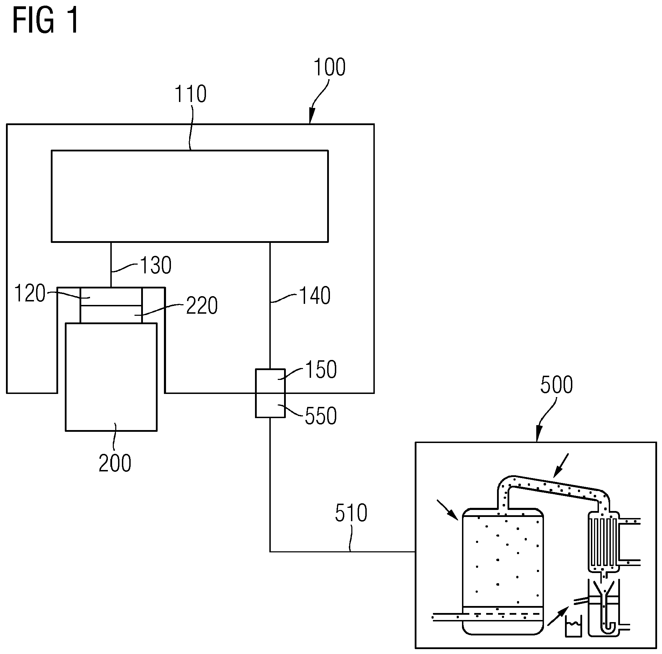

Fig. 1 zeigt eine Steuerung 100 mit einem internen Controller 110 zur Steuerung einer Anlage 500. Die Steuerung 100 stellt dabei ein Beispiel für ein Steuerungs-Grundgerät gemäß der vorliegenden Beschreibung dar. Über einen internen Datenbus 140 und eine I/O-Schnittstelle 150, einen Feldbusanschluss 550 und einen Feldbus 510 steuert ein im Controller 110 ablaufendes Steuerungsprogramm die Anlage 500. Weiterhin umfasst die Steuerung 100 einen Sicherheitsdatenbus 130, über welchen ein Sicherheitsmodul 200 gemäß der vorliegenden Beschreibung mit dem Controller 110 verbunden ist. Die Verbindung erfolgt über ein Steckerelement 120 der Steuerung 100 und ein entsprechendes Gegen-Steckerelement 220 des Sicherheitsmoduls 200.

Das Sicherheitsmodul 200 umfasst beispielsweise einen Schlüssel zur Verschlüsselung von Daten, die vom Controller 110 zur Anlage 500 gesendet werden.

Dabei kann das Sicherheitsmodul 200 beispielsweise Schlüssel enthalten, welche über den Sicherheitsdatenbus 130 an den Controller 110 gesendet werden, um dort zur Verschlüsselung der an die Anlage 500 gesendeten Daten genützt zu werden. Alternativ kann das Sicherheitsmodul 200 auch die Schlüssel und die gesamte Verschlüsselungslogik umfassen, so dass beispielsweise vom Controller 110 an die Anlage 500 zu versendende Daten erst über den Sicherheitsbus 130 an das Sicherheitsmodul gesendet werden, dort verschlüsselt werden, die verschlüsselten Daten zurück über den Sicherheits-Datenbus 130 an den Controller 110 gesendet werden und von dort an die Anlage 500.

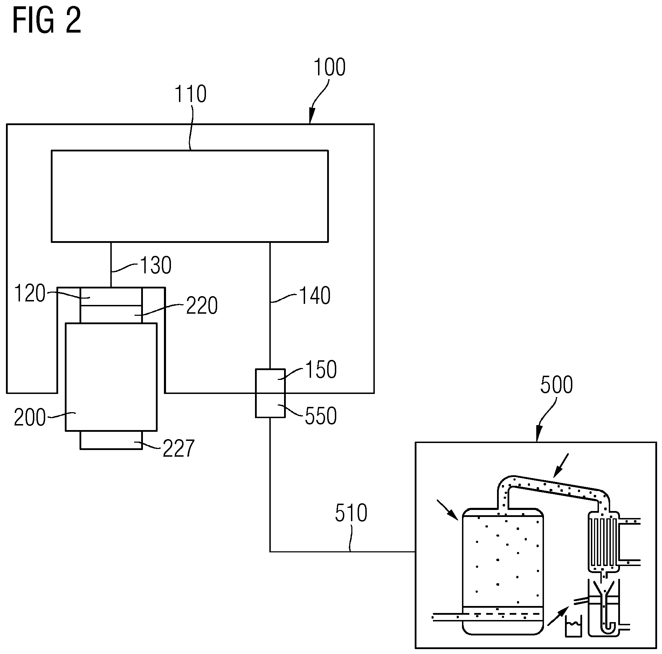

Fig. 2 zeigt die in Figur 1 dargestellte Steuerung, wobei das Sicherheitsmodul 200 in der in Figur 1 dargestellten Ausgestaltung eine zusätzliche externe Kommunikations-Schnittstelle mit einem externen Verbindungselement 227 aufweist, über welches eine unmittelbare Kommunikation mit einer externen Datenverarbeitungseinrichtung möglich ist. Die externe Kommunikations-Schnittstelle des Sicherheitsmoduls 200 kann z.B. als eine Ethernet- oder Internet-Schnittstelle oder auch als Feldbus-Schnittstelle mit einem entsprechend an den Schnittstellentyp angepassten externen Verbindungselement 227 ausgebildet sein. Über diese externe Kommunikations-Schnittstelle des Sicherheitsmoduls 200 kann z.B. das Sicherheitsmodul unmittelbar, oder alternativ auch der Controller 110 über das Sicherheitsmodul 200, mit einer weiteren Steuerung, einem Computer, der Anlage 500 oder auch einem weiteren Sicherheitsmodul gemäß der vorliegenden Beschreibung (z.B. innerhalb einer weiteren Sicherheits-Steuereinrichtung gemäß der vorliegenden Beschreibung) kommunizieren.

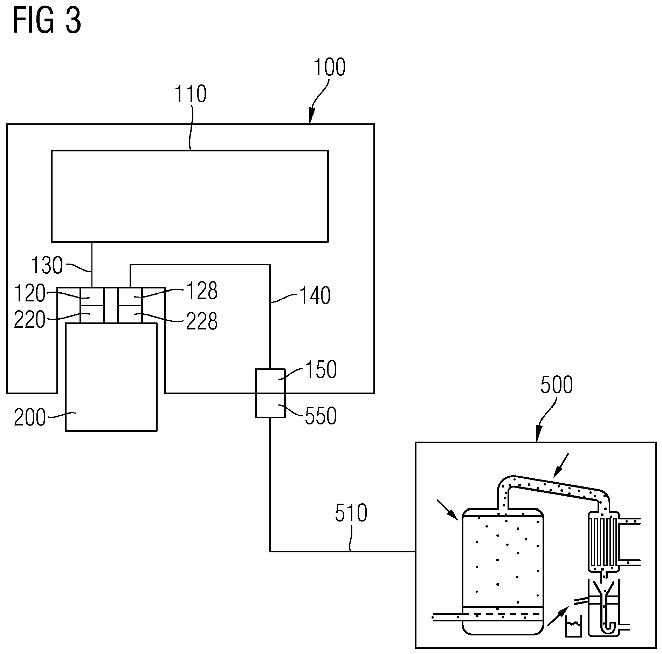

Fig. 3 zeigt eine alternative Ausgestaltung der Steuerung 100, wobei die Steuerung 100 einen zusätzlichen Steckverbinder 128 zur Kontaktierung eines zusätzlichen Gegensteckverbinders 228 des Sicherheitsmoduls 200 umfasst und die Datenverbindung 140 zur I/O-Schnittstelle 150 der Steuerung 100 nun unmittelbar vom zusätzlichen Steckverbinder 128 der Steuerung 100 erfolgt. Mit dieser Ausgestaltung lässt sich beispielsweise die Verschlüsselung von an die Anlage 500 gesendeten Daten einfacher erreichen, indem beispielsweise der Controller 110 die zu versendenden Daten über den Sicherheitsdatenbus 130 an das Sicherheitsmodul 200 sendet, diese dort verschlüsselt werden und vom Sicherheitsmodul über den I/O-Datenbus 140 und den Feldbus 510 dann unmittelbar verschlüsselt zur Anlage 500 versendet werden.

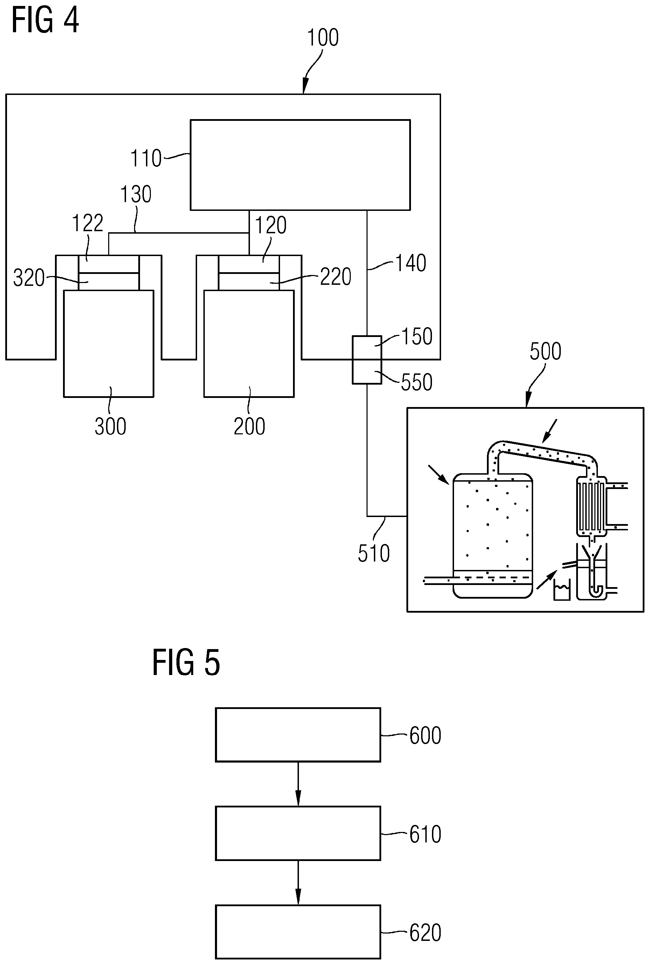

Fig. 4 zeigt eine weitere Ausgestaltungsmöglichkeit der Steuerung 100, bei welcher zusätzlich zum Sicherheitsmodul ein weiteres Sicherheitsmodul 300 über den Sicherheits-Datenbus 130 mit dem Controller 110 verbunden ist. Das weitere Sicherheitsmodul 300 umfasst ein weiteres Gegen-Steckerelement 320, über welches über ein weiteres Steckerelement 122 der Steuerung 100 die Kommunikation des weiteren Sicherheitsmoduls 300 über den Sicherheits-Datenbus 130 erfolgen kann.

Dabei können die Steuerung 100, das Sicherheitsmodul 200 sowie das weitere Sicherheitsmodul 300 derart ausgebildet sein, dass der Controller 110 jeweils mit jedem der Sicherheitsmodul 200, 300 gesondert kommuniziert und jeweils beispielsweise ergänzende Informationen bei den Sicherheitsmodulen 200, 300 abruft beziehungsweise dorthin versendet. Alternativ können die Sicherheitsmodule 200, 300 auch derart ausgebildet sein, dass sie zu Kommunikation untereinander über den Sicherheitsdatenbus 130 befähigt sind.

Auf diese Weise können die Sicherheitsmodule 200, 300 auch unmittelbar interagieren. Das in Fig. 4 dargestellte System kann beispielsweise derart eingerichtet sein, dass das erste Sicherheitsmodul 200 ein Schlüsselmanagement-System umfasst, während das zweite Sicherheitsmodul 300 einen Verschlüsselungsmechanismus selbst umfasst. Bei einem solchen System kann beispielsweise das Schlüsselmanagement zwischen dem Controller 110 und dem ersten Sicherheitsmodul 200 erfolgen und die nachfolgende Verschlüsselung nachher im zweiten Sicherheitsmodul 300. Alternativ kann durch das erste Sicherheitsmodul und das dort implementierte Schlüsselmanagement ein entsprechender Schlüssel über den Sicherheits-Datenbus 130 dem zweiten Sicherheitsmodul 300 zur Verfügung gestellt werden und dort vorhandene Daten beziehungsweise vom Controller 110 an das zweite Sicherheitsmodul 300 übertragene Daten verschlüsselt werden. Diese Daten können dann nachfolgend beispielsweise an die Anlage 500 über den Controller 110 und den Feldbus 510 übertragen werden.

In einer Abwandlung der in Fig. 4 dargestellten Ausgestaltung, kann alternativ ein weiterer Sicherheitsdatenbus vorgesehen sein (nicht in Fig. 4 dargestellt), der exklusiv die beiden Sicherheitsmodule 200, 300, verbindet. Dieser Sicherheitsdatenbus könne entweder als Teil der Steuerung 100 vorhanden sein, oder auch über ein separates Bauteil (z.B. ein Kabel) die beiden Module unmittelbar, z.B. außerhalb des Grundgeräts, verbinden.

Fig. 5 zeigt beispielhaft einen Verschlüsselungsablauf unter Verwendung der in Fig. 1 dargestellten Steuerung 100, wobei der Controller 110 eine eigene interne Kryptofunktionalität gemäß der vorliegenden Beschreibung aufweist. In Fig. 5 erfolgt in einem ersten Verfahrensschritt 600 eine Eingabe von Daten, in einem zweiten Verfahrensschritt 610 erfolgt eine Verarbeitung dieser Daten unter Verwendung der internen Kryptofunktionalität des Controllers 110 sowie der Kryptofunktionalität des Sicherheitsmoduls 200. In einem dritten Verfahrensschritt 620 werden dann diese verarbeiteten Daten ausgegeben.

Die Fig. 6 zeigt ein weiteres Ausführungsbeispiel der Erfindung als ein Ablaufdiagramm des erfindungsgemäßen Verfahrens zum Senden kryptographisch geschützter Netzwerkpakete.

Das Verfahren umfasst einen ersten Verfahrensschritt 610 zum Selektieren von Netzwerkpaketen mittels eines Paketfilters unter Verwendung von vorgegebenen Selektionsparamatern.

Das Verfahren umfasst einen zweiten Verfahrensschritt 620 zum kryptographischen Verarbeiten zumindest eines Netzwerkpaketteils der jeweils selektierten Netzwerkpakete.

Das Verfahren umfasst einen dritten Verfahrensschritt 630 zum Anpassen der kryptographisch verarbeiteten Netzwerkpakete an ein erstes Zielnetzwerk.

Das Verfahren umfasst einen vierten Verfahrensschritt 640 zum Senden der kryptographisch verarbeiteten Netzwerkpakete als kryptographisch geschützte Netzwerkpakete an das erste Zielnetzwerk.

Die Fig. 7 zeigt ein weiteres Ausführungsbeispiel der Erfindung als ein Ablaufdiagramm des erfindungsgemäßen Verfahrens zum Empfangen kryptographisch geschützter Netzwerkpakete.

Das Verfahren umfasst einen ersten Verfahrensschritt 710 zum Empfangen und Selektieren von Netzwerkpaketen mittels eines Paketfilters unter Verwendung von vorgegebenen Selektionsparamatern, wobei zumindest ein Netzwerkpaketteil der selektierten Netzwerkpakete kryptographisch geschützt ist.

Das Verfahren umfasst einen zweiten Verfahrensschritt 720 zum Aufheben und/oder Auswerten eines kryptographischen Schutzes des geschützten Netzwerkpaketteils der jeweils selektierten Netzwerkpakete.

Das Verfahren umfasst einen dritten Verfahrensschritt 730 zum Anpassen der ausgewerteten und/oder der Netzwerkpakete ohne kryptographischen Schutz an ein zweites Zielnetzwerk.

Das Verfahren umfasst einen vierten Verfahrensschritt 740 zum Senden der ausgewerteten Netzwerkpakete und/oder der Netzwerkpakete ohne kryptographischen Schutz an das zweite Zielnetzwerk.

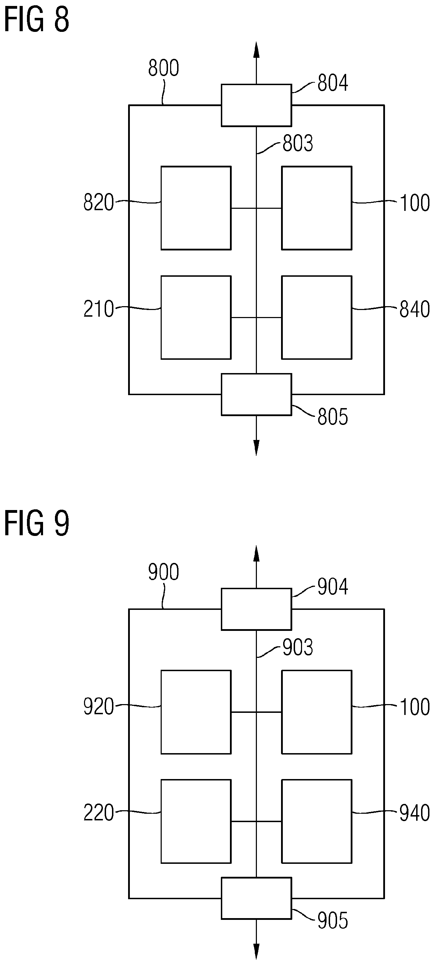

Die Fig. 8 zeigt ein weiteres Ausführungsbeispiel der Erfindung als erste modulare Sicherheits-Steuerungseinrichtung 800 zum Senden kryptographisch geschützter Netzwerkpakete.

Die erste modulare Sicherheits-Steuerungseinrichtung 800 umfasst ein Steuerungs-Grundgerät 100, eine erste Klassifikationseinheit 820, ein erstes Sicherheitsmodul 210, eine erste Paketanpassungseinheit 840, eine erste Kommunikationsschnittstelle 804 (z. B. zur Anbindung an ein erstes Quellnetzwerk) und eine zweite Kommunikationsschnittstelle 805 (z. B. zur Anbindung an ein erstes Zielnetzwerk), die über einen ersten Bus 803 kommunikativ miteinander verbunden sind.

Der Bus kann beispielsweise so realisiert sein, dass für die Einheiten/Komponenten jeweils eine Punkt-zu-Punkt Kommunikation realisiert wird, damit insbesondere nur die für die Verarbeitung notwendigen Daten zwischen den entsprechenden Einheiten/Komponenten ausgetauscht werden.

Die erste modulare Sicherheits-Steuerungseinrichtung 800 kann beispielsweise zusätzlich noch eine weitere oder mehrere weitere Komponente/n umfassen, wie beispielsweise einen Prozessor, einen Speicherbaustein, ein Eingabegerät, insbesondere eine Computertastatur oder eine Computermaus, und ein Anzeigegerät (z. B. einen Monitor). Die weitere/n Komponente/n können beispielsweise ebenfalls über den ersten Bus 803 miteinander kommunikativ verbunden sein.

Die erste Klassifikationseinheit 820 ist mittels eines Paketfilters zum Selektieren von Netzwerkpaketen unter Verwendung von vorgegebenen Selektionsparamatern eingerichtet.

Die erste Klassifikationseinheit 820 kann beispielsweise mittels eines Prozessors (z. B. Prozessor der ersten modularen Sicherheits-Steuerungseinrichtung 800 oder des ersten Sicherheitsmoduls 210), einem Speicherbaustein (z. B. Speicherbaustein der ersten modularen Sicherheits-Steuerungseinrichtung 800 oder des Sicherheitsmoduls 210) und einer ersten Programmkomponente (z. B. Paketfilter) realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die Netzwerkpakete selektiert werden.

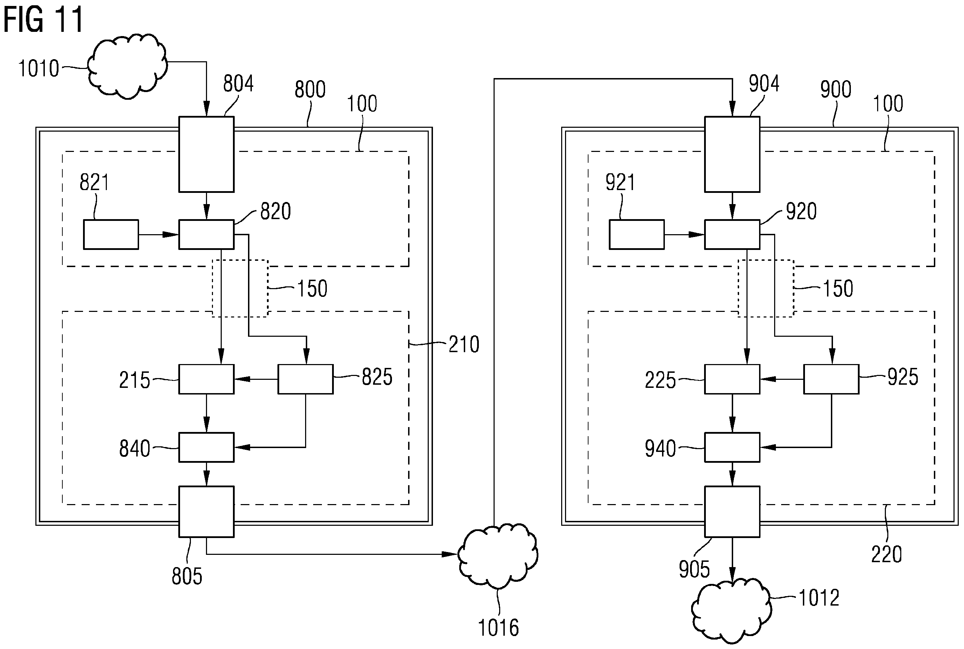

Das erste Sicherheitsmodul 210 ist für eine kryptographische Verarbeitung zumindest eines Netzwerkpaketteils der selektieren Netzwerkpakete eingerichtet, wobei das erste Sicherheitsmodul 210 mittels einer Datenverbindung über eine Datenschnittstelle (die z. B. mit dem ersten Bus 803 verbunden ist oder ein Teil des ersten Busses 803 ist) mit dem ersten Steuerungs-Grundgerät 100 verbunden ist und das Steuerungs-Grundgerät 100 optional/insbesondere zur Abfrage einer Identität und/oder Authentizität des ersten Sicherheitsmoduls 210 eingerichtet ist. Die genannte Datenschnittstelle ist dabei in den nachfolgenden Figuren 11 - 14 mit dem Bezugszeichen 150 versehen. Die Datenschnittstelle kann beispielsweise als Steckverbindung realisiert sein.

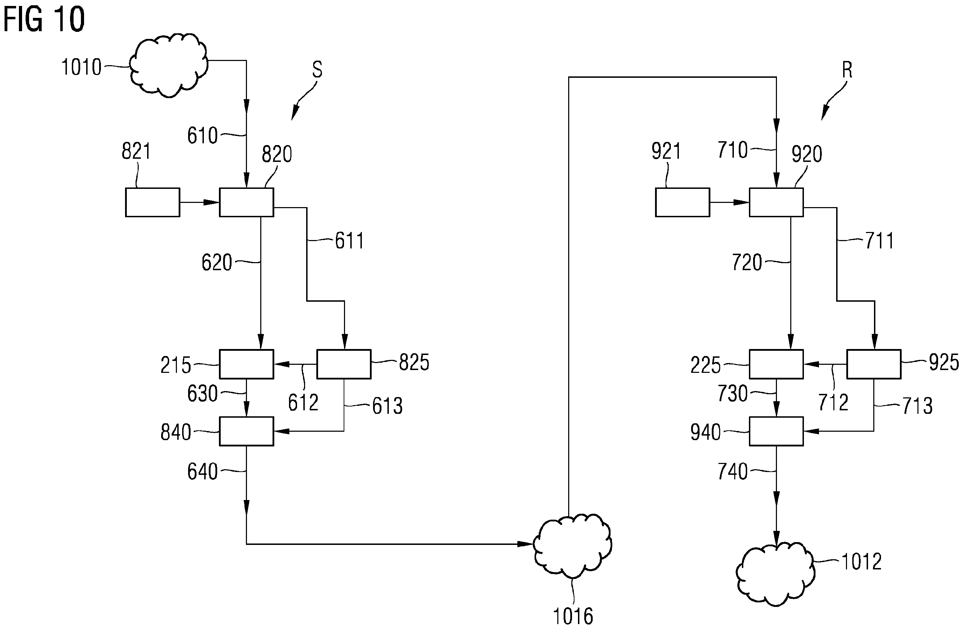

Das erste Sicherheitsmodul 210 kann beispielsweise mittels eines Prozessors (z. B. ein Prozessor der im ersten Sicherheitsmodul 210 integriert ist), einem Speicherbaustein (z. B. Speicherbaustein der im ersten Sicherheitsmodul 210 integriert ist) und einer zweiten Programmkomponente (z. B. eine Programmbibliothek mit kryptographischen Funktionen wie OpenSSL) realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass das erste Sicherheitsmodul 210 die genannten Funktionen durchführt. Der Prozessor und der Speicherbaustein können beispielsweise eine integrale erste Verarbeitungseinheit (Bezugszeichen 215 in Fig. 10 - 14) des ersten Sicherheitsmoduls 210 bilden, so wie dies in den nachfolgen Figuren 10 - 14 dargestellt ist.

Die erste Paketanpassungseinheit 840 ist dazu eingerichtet die kryptographisch verarbeiteten Netzwerkpakete an das erste Zielnetzwerk anzupassen.

Die erste Paketanpassungseinheit 840 kann beispielsweise mittels eines Prozessors (z. B. Prozessor der ersten modularen Sicherheits-Steuerungseinrichtung 800 oder des ersten Sicherheitsmoduls 210), einem Speicherbaustein (z. B. Speicherbaustein der ersten modularen Sicherheits-Steuerungseinrichtung 800 oder des ersten Sicherheitsmoduls 210) und einer dritten Programmkomponente realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Netzwerkpakete angepasst werden.

Zudem ist das Steuerungs-Grundgerät 100 zum Zusammenwirken mit dem ersten Sicherheitsmodul 210 eingerichtet, damit die die erste modulare Sicherheits-Steuerungseinrichtung 800 die kryptographisch verarbeiteten Netzwerkpakete als kryptographisch geschützte Netzwerkpakete an das erste Zielnetzwerk sendet.

Das Steuerungs-Grundgerät 100 kann beispielsweise mittels eines Prozessors (z. B. Prozessor der ersten modularen Sicherheits-Steuerungseinrichtung 800), einem Speicherbaustein (z. B. Speicherbaustein der ersten modularen Sicherheits-Steuerungseinrichtung 800) und einer vierten Programmkomponente realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass das Steuerungs-Grundgerät 100 die notwendigen Funktionen realisiert.

Die Fig. 9 zeigt ein weiteres Ausführungsbeispiel der Erfindung als zweite modulare Sicherheits-Steuerungseinrichtung 900 zum Empfangen kryptographisch geschützter Netzwerkpakete.

Die erste modulare Sicherheits-Steuerungseinrichtung umfasst ein Steuerungs-Grundgerät 100, eine zweite Klassifikationseinheit 920, ein zweites Sicherheitsmodul 220, eine zweite Paketanpassungseinheit 940, eine dritte Kommunikationsschnittstelle 904 (z. B. zur Anbindung an ein erstes Zielnetzwerk) und eine vierte Kommunikationsschnittstelle 905 (zur Anbindung an ein zweites Zielnetzwerk), die über einen zweiten Bus 903 kommunikativ miteinander verbunden sind.

Der Bus kann beispielsweise so realisiert sein, dass für die Einheiten/Komponenten jeweils eine Punkt-zu-Punkt Kommunikation realisiert wird, damit insbesondere nur die für die Verarbeitung notwendigen Daten zwischen den entsprechenden Einheiten/Komponenten ausgetauscht werden.

Die zweite modulare Sicherheits-Steuerungseinrichtung 900 kann beispielsweise zusätzlich noch eine weitere oder mehrere weitere Komponente/n umfassen, wie beispielsweise einen Prozessor, einen Speicherbaustein, ein Eingabegerät, insbesondere eine Computertastatur oder eine Computermaus, und ein Anzeigegerät (z. B. einen Monitor). Die weitere/n Komponente/n können beispielsweise ebenfalls über den zweiten Bus 903 miteinander kommunikativ verbunden sein.

Die zweite Klassifikationseinheit 920 ist mittels eines Paketfilters zum Selektieren von Netzwerkpaketen unter Verwendung von vorgegebenen Selektionsparamatern eingerichtet, wobei zumindest ein Netzwerkpaketteil der selektierten Netzwerkpakete kryptographisch geschützt ist.

Die zweite Klassifikationseinheit 920 kann beispielsweise mittels eines Prozessors (z. B. Prozessor der zweiten modularen Sicherheits-Steuerungseinrichtung 900 oder des zweiten Sicherheitsmoduls 220), einem Speicherbaustein (z. B. Speicherbaustein der zweiten modularen Sicherheits-Steuerungseinrichtung 900 oder des zweiten Sicherheitsmoduls 220) und einer ersten Programmkomponente (z. B. Paketfilter) realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die Netzwerkpakete selektiert werden.

Das zweite Sicherheitsmodul 220 ist zum Aufheben und/oder Auswerten eines kryptographischen Schutzes des geschützten Netzwerkpaketteils der selektierten Netzwerkpakete eingerichtet, wobei das zweite Sicherheitsmodul 220 mittels einer Datenverbindung (die z. B. mit dem zweiten Bus 903 verbunden ist oder ein Teil des zweiten Busses 903 ist) über eine Datenschnittstelle mit dem Steuerungs-Grundgerät 100 verbunden ist und das Steuerungs-Grundgerät 100 optional/insbesondere zur Abfrage einer Identität und/oder Authentizität des Sicherheitsmoduls eingerichtet ist. Die genannte Datenschnittstelle ist dabei in den nachfolgenden Figuren 11 - 14 mit dem Bezugszeichen 150 versehen. Die Datenschnittstelle kann beispielsweise als Steckverbindung realisiert sein.

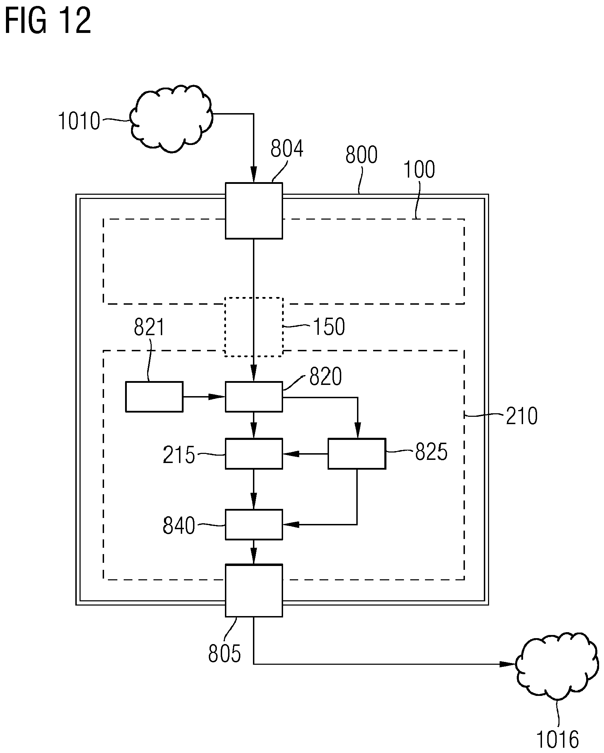

Das zweite Sicherheitsmodul 220 kann beispielsweise mittels eines Prozessors (z. B. ein Prozessor der im zweiten Sicherheitsmodul 220 integriert ist), einem Speicherbaustein (z. B. Speicherbaustein der im zweiten Sicherheitsmoduls 220 integriert ist) und einer zweiten Programmkomponente (z. B. eine Programmbibliothek mit kryptographischen Funktionen wie OpenSSL) realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass das zweite Sicherheitsmodul 220 die genannten Funktionen durchführt. Der Prozessor und der Speicherbaustein können beispielsweise eine integrale zweite Verarbeitungseinheit (Bezugszeichen 225 in Fig. 10 - 11 bzw. in den analogen zweiten modularen Sicherheitssteuereinrichtungen der Fig. 12 - 14) des zweiten Sicherheitsmoduls 220 bilden, so wie dies in den nachfolgen Figuren 10 - 14 dargestellt ist.

Die zweite Paketanpassungseinheit 940 ist dazu eingerichtet, die ausgewerteten Netzwerkpakete und/oder die Netzwerkpakete ohne kryptographischen Schutz an das zweite Zielnetzwerk anzupassen.

Die zweite Paketanpassungseinheit 940 kann beispielsweise mittels eines Prozessors (z. B. Prozessor der zweiten modularen Sicherheits-Steuerungseinrichtung 900 oder des zweiten Sicherheitsmoduls 220), einem Speicherbaustein (z. B. Speicherbaustein der zweiten modularen Sicherheits-Steuerungseinrichtung 900 oder des zweiten Sicherheitsmoduls 220) und einer dritten Programmkomponente realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Netzwerkpakete angepasst werden.

Zudem ist das Steuerungs-Grundgerät 100 zum Zusammenwirken mit dem ersten Sicherheitsmodul 220 eingerichtet, damit die zweite modulare Sicherheits-Steuerungseinrichtung die ausgewerteten und/oder die Netzwerkpakete ohne kryptographischen Schutz (also die Netzwerkpakete mit dem aufgehobenen kryptographischen Schutz) an das zweite Zielnetzwerk sendet.

Das Steuerungs-Grundgerät 100 kann beispielsweise mittels eines Prozessors (z. B. Prozessor der zweiten modularen Sicherheits-Steuerungseinrichtung 900), einem Speicherbaustein (z. B. Speicherbaustein der zweiten modularen Sicherheits-Steuerungseinrichtung 900) und einer vierten Programmkomponente realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass das Steuerungs-Grundgerät 100 die notwendigen Funktionen realisiert.

Mit anderen Worten ist man mit der Erfindung (und den genannten Ausführungsbeispielen, insbesondere die Ausführungsbeispiele der Fig. 6 - 9) insbesondere in der Lage, eine Aufteilung und Synchronisation der reinen Kryptofunktionalität (Verschlüsselung, kryptographischer Integritätsschutz) mit den nötigen Protokollanpassungen innerhalb eines modular aufgebauten Geräts zur kryptographischen Verarbeitung von Netzverkehr zu realisieren.

Insbesondere wird durch diese Aufteilung erreicht, den Informationsaustausch für die Verarbeitung der Netzwerkpakete zu beschränken. Beispielsweise ist es denkbar, dass der Informationsaustausch auf das absolut notwendige Minimum (bspw. müssen die Sicherheitsmodule 210/220 die Netzwerkadressen des Pakets nicht kennen) beschränkt wird. Dabei wird insbesondere durch gesicherte (Daten/Kommunikations)-Schnittstellen erreicht, dass beispielsweise keine Komponenten Zugriff auf Daten erhalten, die nicht zur Erledigung ihrer jeweiligen Aufgabe benötigt werden. Insbesondere kann hierdurch ein erforderliches Vertrauen in die einzelnen Komponenten verringert werden(nicht vertrauenswürdige, z.B. manipulierte Komponenten), indem beispielsweise auch Komponenten verwendet werden können, die über geringe oder keine Sicherheitsmechanismen verfügen.

Die Kommunikation zwischen den Einheiten/Komponenten (die beispielsweise in den nachfolgenden Figuren durch Pfeile dargestellt sind) kann beispielsweise über die gesicherten Schnittstellen als Punkt-zu-Punkt Kommunikation realisiert werden, dabei sind die entsprechenden/jeweiligen Schnittstellen der entsprechenden Einheiten/Komponenten derart eingerichtet, dass insbesondere ausschliesslich die für die Verarbeitung notwendigen Daten ausschließlich zwischen den relevanten Komponenten/Einheiten ausgetauscht werden können.

Die Fig. 10 zeigt dabei, wie die einzelnen Komponenten/Aspekte der in den Fig. 6 - 9 erläuterten Ausführungsbeispiele zusammen arbeiten.

Im Einzelnen zeigt die Fig. 10 auf der linken Seite S die Elemente der in Fig. 8 dargestellten Ausführungsform, welche die in Fig. 6 gezeigten Verfahrensschritte 610, 620, 630, 640 realisieren. Die gezeigten Elemente der ersten modularen Sicherheits-Steuerungseinrichtung 800 (Fig. 8) sind die erste Klassifikationseinheit 820 und die erste Paketanpassungseinheit 840. Zusätzlich wird noch die erste Verarbeitungseinheit 215 des ersten Sicherheitsmoduls gezeigt.

Auf der der rechten Seite R der Fig. 10 sind die Elemente der in Fig. 9 dargestellten Ausführungsform dargestellt, welche die in Fig. 7 gezeigten Verfahrensschritte 710, 720, 730, 740 realisieren. Die gezeigten Elemente der zweiten modularen Sicherheits-Steuerungseinrichtung (Fig. 9) sind die zweite Klassifikationseinheit 920 und die zweite Paketanpassungseinheit 940. Zusätzlich wird noch die zweite Verarbeitungseinheit 225 des zweiten Sicherheitsmoduls gezeigt.

Die erste modulare Sicherheits-Steuerungseinrichtung und die zweite modulare Sicherheitseinrichtung stehen über ein erstes Zielnetzwerk 1016 (z. B. einem WAN oder dem Internet) kommunikativ miteinander in Verbindung. Das erste Zielnetzwerk 1016 ist dabei beispielsweise ein nicht vertrauenswürdiges Netzwerk.

Die erste modulare Sicherheits-Steuerungseinrichtung ist zudem an ein erstes Quellnetzwerk 1010 (z. B. einem Ethernet-Netzwerk) angebunden. Die zweite modulare Sicherheits-Steuerungseinrichtung ist zudem an ein zweites Zielnetzwerk 1012 (z. B. einem Ethernet-Netzwerk) angebunden.

Zudem kann die erste modulare Sicherheits-Steuerungseinrichtung optional eine erste Paketzusatzdatenverarbeitungseinheit 825 umfassen. Analog kann auch die zweite modulare Sicherheits-Steuerungseinrichtung eine optionale zweite Paketzusatzdatenverarbeitungseinheit 925 umfassen.

Im Verfahrensschritt 610 werden Netzwerkpakete, welche die erste modulare Sicherheits-Steuerungseinrichtung vom ersten Quellnetzwerk in Senderichtung erreichen, zunächst durch die Klassifikationseinheit 820 selektiert. Diese Selektion erfolgt anhand frei konfigurierbarer Bewertungsparameter (z. B. durch die vorgegebenen Selektionsparamater), die beispielsweise in einer ersten Konfigurationseinheit 821 gespeichert sind.

Die Klassifikationseinheit kann in einer Variante den Netzwerkpaketteil, d.h. den Ausschnitt eines Netzwerkpakets, ermitteln, der einer kryptographischen Verarbeitung unterzogen wird. Dies ist vorteilhaft, da flexibelderjenige Teil eines Netzwerkpakets bestimmt werden kann, der kryptographisch zu verarbeiten ist. Dadurch kann beispielsweise eine Layer2-Verschlüsselung, eine Layer3-Verschlüsselung oder ein kryptographischer Schutz eines Applikationsprotokolls oder nur eines Applikationsprotokolldatenfelds erfolgen. Dadurch kann gezielt nur ein relevanter Teil eines Datenpakets (auch als Netzwerkpaket bezeichnet) kryptographisch geschützt werden. Ein Gerät bestehend aus Steuerungs-Grundgerät und Sicherheitsmodul kann insbesondere flexibel verwendet werden, um unterschiedliche Paketteile von unterschiedlichen Pakettypen kryptographisch zu verarbeiten. Dies ermöglicht insbesondere im industriellen Umfeld, die unterschiedlichen Schutzanforderungen und Realtime-Anforderungen bei der Übertragung von Datenpaketen/Netzwerkpaketen zu berücksichtigen. So können bei besonders echtzeitkritischen Steuerkommandos oder bei Safety-Protokoll applikationsspezifische Verarbeitung erfolgen, wogegen Überwachungsdaten nach einem IPsec- oder TLS-Verfahren geschützt werden.

Weiterhin kann beispielsweise die Klassifikationseinheit einen Schlüssel bzw. eine Sicherheitsbeziehung bestimmen. Dadurch kann z. B. eine Sicherheitsbeziehung für einen Layer-2-Schutz wie z. B. MACsec eines Netzwerkpakets abhängig von einem in dem Datenpaket (z. B. Netzwerkpaket) enthaltenen Applikationsprotokolls oder eines Applikationsprotokollparameters bestimmt werden.

Die Erfindung ist dahingehend vorteilhaft, da ein Sicherheitsmodul verwendet werden kann, um unterschiedliche Arten der kryptographischen Verarbeitung eines Pakets durchzuführen. Zusammengefasst bestimmt insbesondere die Klassifikationseinheit, welcher Teil eines Datenpakets/Netzwerkpakets auf welche Art vorzugsweise kryptographisch bearbeitet werden soll. Das Sicherheitsmodul dagegen führt vorzugsweise die kryptographische Verarbeitung des ausgewählten Paketteils gemäß der bestimmten kryptographischen Verarbeitungsart durch. Die bestimmte kryptographischen Verarbeitungsart kann beispielsweise als Steuerparameter dem Sicherheitsmodul bereitgestellt werden. Diese Architektur ermöglicht z. B. eine flexible Realisierung von unterschiedlichen kryptographischen Verfahren und auf unterschiedlichen Protokollschichten. Das Sicherheitsmodul ist dagegen insbesondere nur für die Durchführung der kryptographischen Verarbeitung zuständig, ohne insbesondere eine Netzwerkprotokollbearbeitungsfunktion realisieren zu müssen.

In einer Variante bestimmt die Klassifikationseinheit eine Folge von Verarbeitungsschritten, die durch das Sicherheitsmodul durchgeführt werden. Dies ist vorteilhaft, da durch das gleiche Sicherheitsmodul mehrere kryptographische Verarbeitungsschritte vorgebbar sind. Beispielsweise kann ein erster Verarbeitungsschritt die kryptographische Verarbeitung eines Parameters eines Applikationsprotokolls betreffen und un zweiter Verarbeitungsschritt ein IP-Datenpaket.

In einer weiteren Variante ist eine Verarbeitungsartprüfeinheit vorgesehen, die den bestimmten Verarbeitungsschritts unter Verwendung einer Positivliste von zulässigen Verarbeitungsarten auf Zulässigkeit prüft. Nur bei positiver Überprüfung wird insbesondere eine Bearbeitung durch das Sicherheitsmodul freigegeben.

In einer weiteren Variante ist über einen Lizenzcode oder eine Konfigurationsparameter freischaltbar, welche Verarbeitungsarten zulässig sind. Die Überprüfung kann insbesondere durch das Steuerungs-Grundgerät, durch das Sicherheitsmodul oder durch eine zusätzliche Verarbeitungsartüberprüfungskomponente erfolgen.

Ein Sicherheitsmodul kann insbesondere eine Information bereitstellen, welche Verarbeitungsarten durch das Sicherheitsmodul durchführbar sind. Diese Information kann vorzugsweise verwendet werden, um zu prüfen, dass eine durch die Klassifikationseinheit ermittelte Verarbeitungsart durchführbar ist.

In einer weiteren Variante sind mehrere Sicherheitsmodule vorgesehen. Abhängig von der bestimmten Verarbeitungsart kann eines der mehreren Sicherheitsmodule ausgewählt werden.

Die Bewertung/das Seleketieren kann auf beliebigen Teilen des bearbeiteten Netzwerkpakets beruhen wie z. B. Nachrichtentyp (IP-Paket, UDP-Paket, Broadcast-Paket) oder Paket Header. Hierzu kann beispielsweise eine Programmbibliothek, wie z. B. PCAP genutzt werden. Alternativ kann diese Funktionalität auch in Hardware realisiert werden, in dem diese beispielsweise mittels einer Hardware-Implementierung basierend auf TCAMs (ternary content-addressable memory) realisiert wird.

Als Ergebnis erhält man diejenigen Teile des Netzwerkpakets, die durch die erste Verarbeitungseinheit 215 des ersten Sicherheitsmoduls kryptographisch verarbeitet werden bzw. einer kryptographischen Bearbeitung durch die erste Verarbeitungseinheit 215 unterworfen werden (Verfahrensschritt 620).

Zusätzlich werden im Verfahrensschritt 611 zu jedem Paket Paketzusatzdaten gespeichert. Umfasst beispielsweise die erste modulare Sicherheits-Steuerungseinrichtung die erste Paketzusatzdatenverarbeitungseinheit 825, so können diese Paketzusatzdaten durch die erste Paketzusatzdatenverarbeitungseinheit 825 gespeichert werden.

Die Paketzusatzdaten stellen insbesondere Informationen zur Verfügung, die zur Paketanpassung der kryptographisch bearbeiteten Netzwerkpakete durch die Paketanpassungseinheit 840 benötigt werden, bevor diese an das erste Zielnetzwerk übergeben werden. Zusätzlich können die Paketzusatzdaten diejenigen Daten eines Netzwerkpaketes beschreiben, die nicht kryptographisch bearbeitet wurden und die dann beispielsweise nicht angepasst werden müssen.

Dies ist zum Beispiel relevant, wenn Sendeadressen und/oder Zieladresse für das erste Quellnetzwerk bzw. das zweite Zielnetzwerk verschlüsselt wurden. Beispielsweise würde zum Senden über das erste Zielnetzwerk das Netzwerkpaket oder dessen Dateninhalt in ein neues Netzwerkpaket eingefügt werden, das als Sendeadressen und/oder Zieladresse die entsprechenden Adressen der ersten modularen Sicherheits-Steuerungseinrichtung und/oder der zweiten modularen Sicherheits-Steuerungseinrichtung umfasst.

Die Paketzusatzdaten können auch zur Steuerung der kryptographischen Verarbeitung dienen (z. B. Schlüsselauswahl) und z. B. in einem Verfahrensschritt 612 in die kryptographische Verarbeitung eingehen. Die Paketzusatzdaten können insbesondere aus Teilen des ursprünglich selektierten Netzwerkpakets zusammengesetzt/konstruiert werden. Insbesondere kann ein Teil des kryptographisch verarbeiteten Netzwerkpakets den Paketzusatzdaten explizit in kryptographisch verarbeiteter Form oder kryptographisch unverarbeiteter Form enthalten.

Durch die Paketanpassungseinheit 840 werden insbesondere die kryptographisch bearbeiteten Teile des jeweils ausgewählten Netzwerkpakets an die Eigenschaften des ersten Zielnetzwerks angepasst.
Alternativ oder zusätzlich werden die nicht kryptographische bearbeiteten Teile des jeweils ausgewählten Netzwerkpakets an die Eigenschaften des ersten Zielnetzwerks angepasst.

Dies sind z. B. erlaubte Protokolle (z. B. TCP/IP oder UDP) oder es wird die Subnetzmaske des jeweiligen Netzwerkpaketes an die Subnetzmaske des ersten Zielnetzwerkes angepasst.

In einer Variante werden die Paketzusatzdaten oder eine Untermenge der Paketzusatzdaten in einem Verfahrensschritt 613 nach einer Validierung/Bearbeitung/Filterung durch die erste Verarbeitungseinheit 215 und/oder der ersten Paketzusatzdatenverarbeitungseinheit 825 ebenfalls an die Paketanpassungseinheit 840 übergeben.

Nach dem Anpassen der Netzwerkpakete in Verfahrensschritt 630 werden die kryptographisch geschützten Netzwerkpakete in Verfahrensschritt 640 an das erste Zielnetzwerk durch die erste modulare Sicherheits-Steuerungseinrichtung übergeben.

Diese Aufteilung ist vorteilhaft, da insbesondere die kryptographische Kern-Funktionalität (die Verarbeitungseinheit 215) des Sicherheitsmoduls zum kryptographischen Schutz der selektierten Netzwerkpakete nicht spezifisch für bestimmte Netzwerkprotokolle ausgelegt sein muss. Anhand der Paketzusatzdaten wird insbesondere einem selektierten Netzwerkpaket die Information, wie das entsprechende Netzwerkpaket kryptographisch durch die Verarbeitungseinheit 215 verarbeitet werden soll, zugeordnet.

Dadurch ist es beispielsweise möglich, durch Anpassung der vorgegebenen Selektionsparamatern ("Classification Rules") unterschiedliche Netzwerkprotokolle zu unterstützen.

Wie oben erläutert gibt es unterschiedliche Möglichkeiten die Paketzusatzdaten der ersten Anpassungseinheit und/oder dem ersten Sicherheitsmodul bzw. seiner ersten Verarbeitungseinheit 215 bereitzustellen. Die Paketzusatzdaten können entweder gemeinsam mit den ausgewählten und/oder kryptographisch verarbeiteten Netzwerkpaketen übermittelt werden (In-band-Übertragung). Alternativ können die Paketzusatzdaten über einen separaten Datenbus übermittelt werden (Out-of-band-Übertragung), so wie es in Fig. 10 angedeutet ist..

In einer weiteren Variante wird beim Verarbeiten der Paketzusatzdaten durch die erste Paketzusatzdatenverarbeitungseinheit 825 sichergestellt, dass nur bestimmte Informationen die Paketanpassungseinheit 840 erreichen. Insbesondere kann das gesamte zu sendende Paket verschlüsselt sein, weil die Paketanpassungseinheit 840 nur die Paketzusatzinformation auswerten muss, um die Pakete für den Versand anzupassen.

In einer weiteren Variante wird anhand der Informationen der Paketzusatzdaten die kryptographische Verarbeitung parametrisiert (z.B. Schlüsselauswahl). Dies ist insbesondere dann vorteilhaft, wenn für verschiedene Verbindungen unterschiedliche Schlüssel verwendet werden sollen. Die Verschlüsselungskomponente kann dann mit einfachen Regeln, z.B. einer eins-zu-eins Zuordnung von Paketzusatzdaten zu Schlüsselkennungen, die jeweiligen zu verwendenden Schlüssel auswählen.

In einer weiteren Variante ist die erste Paketzusatzdatenverarbeitungseinheit 825 ein integraler Bestandteil der Klassifikationseinheit 820.

Die zweite modulare Sicherheits-Steuerungseinrichtung ist auf analoge Weise zur ersten modularen Sicherheits-Steuerungseinrichtung ausgebildet. So umfasst die zweite modulare Sicherheits-Steuerungseinrichtung eine zweite Konfigurationseinheit 921 zum Speichern vorgegebenen Selektionsparamater und eine zweite Paketzusatzdatenverarbeitungseinheit 925.

Auch werden die Paketzusatzdaten auf analoge Weise verarbeitet. Die zweite Klassifikationseinheit 920 selektiert die Netzwerkpakete in einem Verfahrensschritt 710 und speichert in einem Verfahrensschritt 711 die Paketzusatzdaten. Umfasst die zweite modulare Sicherheits-Steuerungseinrichtung die zweite Paketzusatzdatenverarbeitungseinheit 925, so werden die Paketzusatzdaten in der zweiten Paketzusatzdatenverarbeitungseinheit 925 gespeichert und/oder verarbeitet. Diese Paketzusatzdaten werden in einem Verfahrensschritt 712 der zweiten Verarbeitungseinheit 225 des zweiten Sicherheitsmoduls 220 bereitgestellt, damit die Paketzusatzdaten im Verfahrensschritt 720 berücksichtigt werden können. Alternativ oder zusätzlich können Paketzusatzdaten oder eine Teilmenge der Paketzusatzdaten der Paketanpassungseinheit 940 in einem Verfahrensschritt 713 bereitgestellt werden.

Nach dem Anpassen der Netzwerkpakete in Verfahrensschritt 740 werden die Netzwerkpakete (mit ausgewerteten und/oder aufgehobenen kryptographischen Schutz) an das zweite Zielnetzwerk 1012 durch die zweite modulare Sicherheits-Steuerungseinrichtung übergeben.

Die beschriebene Architektur lässt sich gleichermaßen für L2 und L3 Verschlüsselung nutzen.

Je nach Erfordernis können die verschiedenen Komponenten zwischen Grundgerät und separatem, z. B. wechselbaren, Sicherheitsmodul verteilt werden. Entsprechende Varianten werden in den nachfolgenden Ausführungsbeispielen erläutert.

Die Figuren zeigen Ausführungsbeispiele, bei denen die einzelnen Einheiten (z. B. Klassifikationseinheiten, Verarbeitungseinheiten, Anpassungseinheiten) jeweils entweder als integrale Bauteile des Steuerungs-Grundgeräts oder des entsprechenden Sicherheitsmoduls ausgebildet sind.

Die Fig. 11 zeigt ein weiteres Ausführungsbeispiel unter Verwendung der Ausführungsbeispiele der Fig. 1-10, insbesondere der Ausführungsbeispiele 6-10. Entsprechend können andere vorteilhafte Ausgestaltungsmöglichkeiten aus diesen Figuren auch auf dieses Ausführungsbeispiel übertragen werden.

Die erste modulare Sicherheits-Steuerungseinrichtung 800 (z. B. eine erste modulare Sicherheits-Steuerungseinrichtung 800 wie sie in Fig. 8 gezeigt ist) umfasst eine erste Kommunikationsschnittstelle 804 (zur Anbindung an das erste Quellnetzwerk 1010), eine zweite Kommunikationsschnittstelle 805 (zur Anbindung an das erste Zielnetzwerk 1016), eine erste Verarbeitungseinheit 215, ein Steuerungs-Grundgerät 100 und ein erstes Sicherheitsmodul 210, wobei das Sicherheitsmodul über eine Datenschnittstelle 150 mit dem Steuerungs-Grundgerät 100 kommunikativ verbunden ist.

Die zweite modulare Sicherheits-Steuerungseinrichtung 900 (z. B. eine erste modulare Sicherheits-Steuerungseinrichtung 900 wie sie in Fig. 9 gezeigt ist) umfasst eine dritte Kommunikationsschnittstelle 904 (zur Anbindung an das erste Zielnetzwerk 1016), eine vierte Kommunikationsschnittstelle 905 (zur Anbindung an das zweite Zielnetzwerk 1012), ein Steuerungs-Grundgerät 100, eine zweite Verarbeitungseinheit 225 und ein erstes Sicherheitsmodul 220, wobei das Sicherheitsmodul über eine Datenschnittstelle 150 mit dem Steuerungs-Grundgerät 100 kommunikativ verbunden ist.

Die Konfigurationseinheiten 821, 921, die Klassifikationseinheiten 820, 920 sind als integrale Elemente des jeweiligen Steuerungs-Grundgerätes 100 ausgebildet. Wohingegen die Anpassungseinheiten 840, 940, die Verarbeitungseinheiten 215, 225 und die Paketzusatzdatenverarbeitungseinheiten 825, 925 als integrale Elemente des jeweiligen Sicherheitsmoduls 210, 220 ausgebildet sind.

Die erste Kommunikationsschnittstelle 804 und/oder die zweite Kommunikationsschnittstelle 805 können beispielsweise als integrale Elemente des Steuerungs-Grundgerätes 100 ausgebildet sein. Alternativ können die erste Kommunikationsschnittstelle 804 und/oder die zweite Kommunikationsschnittstelle 805 als integrale Elemente des Sicherheitsmoduls 210 ausgebildet sein.

Auf analoge Weise können die dritte Kommunikationsschnittstelle 904 und/oder die vierte Kommunikationsschnittstelle 905 für die zweite modulare Sicherheits-Steuerungseinrichtung 900 ausgebildet sein.

Über die erste Kommunikationsschnittstelle 804 hat dabei die erste Klassifikationseinheit 820 Zugriff auf das erste Quellnetzwerk 1010 zum Selektieren der Netzwerkpakete.

Über die zweite Kommunikationsschnittstelle 805 werden die kryptographisch geschützten Netzwerkpakete an das erste Zielnetzwerk 1016 übergeben bzw. gesendet.

Über die dritte Schnittstelle 904 hat dabei die zweite Klassifikationseinheit 920 Zugriff auf das erste Zielnetzwerk 1016 zum Selektieren der kryptographisch geschützten Netzwerkpakete.

Über die vierte Schnittstelle 905 werden die ausgewerteten und/oder die Netzwerkpakete ohne kryptographischen Schutz an das zweite Zielnetzwerk 1012 gesendet/übergeben.

Die Fig. 12 zeigt ein weiteres Ausführungsbeispiel unter Verwendung der Ausführungsbeispiele der Fig. 1-10, insbesondere der Ausführungsbeispiele 6-10. Entsprechend können andere vorteilhafte Ausgestaltungsmöglichkeiten aus diesen Figuren auch auf dieses Ausführungsbeispiel übertragen werden. Der Einfachheit halber, wird in diesem Ausführungsbeispiel nur die erste modulare Sicherheits-Steuerungseinrichtung 800 dargestellt. Die Empfangsseite bzw. die zweite modulare Sicherheits-Steuerungseinrichtung kann auf analoge Weise ausgestaltet sein.

Die erste modulare Sicherheits-Steuerungseinrichtung 800 (z. B. eine erste modulare Sicherheits-Steuerungseinrichtung 800 wie sie in Fig. 8 gezeigt ist) umfasst eine erste Kommunikationsschnittstelle 804 (zur Anbindung an das erste Quellnetzwerk 1010), eine zweite Kommunikationsschnittstelle 805 (zur Anbindung an das erste Zielnetzwerk 1016), eine erste Verarbeitungseinheit 215, ein Steuerungs-Grundgerät 100 und ein erstes Sicherheitsmodul 210, wobei das Sicherheitsmodul über eine Datenschnittstelle 150 mit dem Steuerungs-Grundgerät 100 kommunikativ verbunden ist.

Die erste Konfigurationseinheit 821, die erste Klassifikationseinheit 820, die erste Anpassungseinheit 840, die erste Verarbeitungseinheit 215 und die erste Paketzusatzdatenverarbeitungseinheiten 825 sind als integrale Elemente des ersten Sicherheitsmoduls 210 ausgebildet.

Die erste Kommunikationsschnittstelle 804 und/oder die zweite Kommunikationsschnittstelle 805 können beispielsweise als integrale Elemente des Steuerungs-Grundgerätes 100 ausgebildet sein. Alternativ können die erste Kommunikationsschnittstelle 804 und/oder die zweite Kommunikationsschnittstelle 805 als integrale Elemente des Sicherheitsmoduls 210 ausgebildet sein.

Auf analoge Weise können die dritte Kommunikationsschnittstelle und/oder die vierte Kommunikationsschnittstelle für die zweite modulare Sicherheits-Steuerungseinrichtung ausgebildet sein.

Über die erste Kommunikationsschnittstelle 804 hat dabei die erste Klassifikationseinheit 820 Zugriff auf das erste Quellnetzwerk 1010 zum Selektieren der Netzwerkpakete.

Über die zweite Kommunikationsschnittstelle 805 werden die kryptographisch geschützten Netzwerkpakete an das erste Zielnetzwerk 1016 übergeben bzw. gesendet.

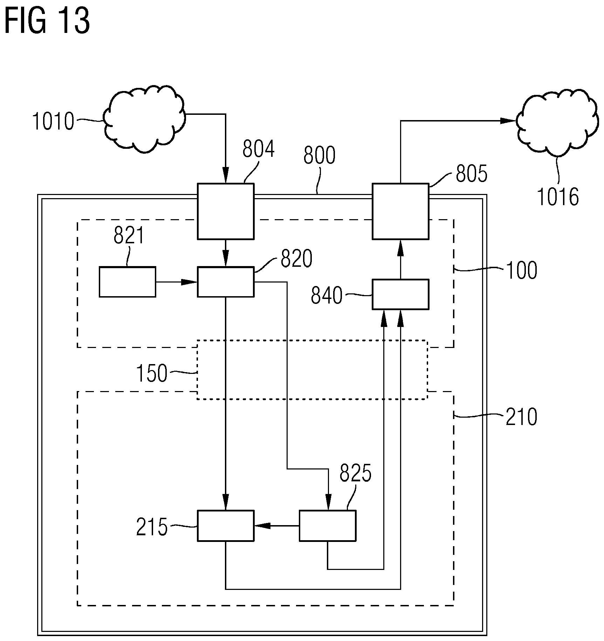

Die Fig. 13 zeigt ein weiteres Ausführungsbeispiel unter Verwendung der Ausführungsbeispiele der Fig. 1-10, insbesondere der Ausführungsbeispiele 6-10. Entsprechend können andere vorteilhafte Ausgestaltungsmöglichkeiten aus diesen Figuren auch auf dieses Ausführungsbeispiel übertragen werden und umgekehrt. Der Einfachheit halber wird in diesem Ausführungsbeispiel nur die erste modulare Sicherheits-Steuerungseinrichtung 800 dargestellt. Die Empfangsseite bzw. die zweite modulare Sicherheits-Steuerungseinrichtung kann auf analoge Weise ausgestaltet sein.

Die erste modulare Sicherheits-Steuerungseinrichtung 800 (z. B. eine erste modulare Sicherheits-Steuerungseinrichtung 800 wie sie in Fig. 8 gezeigt ist) umfasst eine erste Kommunikationsschnittstelle 804 (zur Anbindung an das erste Quellnetzwerk 1010), eine zweite Kommunikationsschnittstelle 805 (zur Anbindung an das erste Zielnetzwerk 1016), eine erste Verarbeitungseinheit 215, ein Steuerungs-Grundgerät 100 und ein erstes Sicherheitsmodul 210, wobei das Sicherheitsmodul über eine Datenschnittstelle 150 mit dem Steuerungs-Grundgerät 100 kommunikativ verbunden ist.

Die erste Konfigurationseinheit 821, die erste Klassifikationseinheit 820, die erste Anpassungseinheit 840, sind als integrale Elemente des Grundgerätes 100 ausgebildet.

Die erste Verarbeitungseinheit 215 und die erste Paketzusatzdatenverarbeitungseinheiten 825 sind als integrale Elemente des ersten Sicherheitsmoduls 210 ausgebildet.

Die erste Kommunikationsschnittstelle 804 und/oder die zweite Kommunikationsschnittstelle 805 können beispielsweise als integrale Elemente des Steuerungs-Grundgerätes 100 ausgebildet sein. Alternativ können die erste Kommunikationsschnittstelle 804 und/oder die zweite Kommunikationsschnittstelle 805 als integrale Elemente des Sicherheitsmoduls 210 ausgebildet sein.

Auf analoge Weise können die dritte Kommunikationsschnittstelle und/oder die vierte Kommunikationsschnittstelle für die zweite modulare Sicherheits-Steuerungseinrichtung ausgebildet sein.

Über die erste Kommunikationsschnittstelle 804 hat dabei die erste Klassifikationseinheit 820 Zugriff auf das erste Quellnetzwerk 1010 zum Selektieren der Netzwerkpakete.

Über die zweite Kommunikationsschnittstelle 805 werden die kryptographisch geschützten Netzwerkpakete an das erste Zielnetzwerk 1016 übergeben bzw. gesendet.

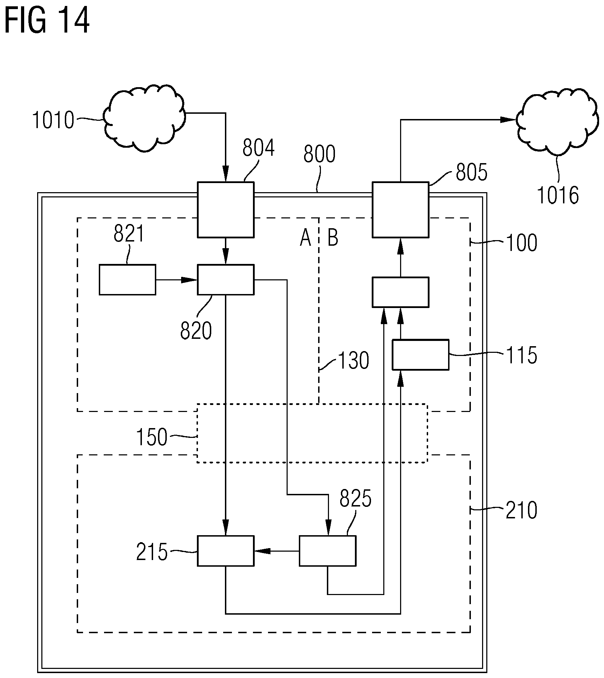

Die Fig. 14 zeigt ein weiteres Ausführungsbeispiel unter Verwendung der Ausführungsbeispiele der Fig. 1-10, insbesondere der Ausführungsbeispiele 6-10. Entsprechend können andere vorteilhafte Ausgestaltungsmöglichkeiten aus diesen Figuren auch auf dieses Ausführungsbeispiel übertragen werden und ungekehrt. Der Einfachheit halber, wird in diesem Ausführungsbeispiel nur die erste modulare Sicherheits-Steuerungseinrichtung 800 dargestellt. Die Empfangsseite bzw. die zweite modulare Sicherheits-Steuerungseinrichtung kann auf analoge Weise ausgestaltet sein.

Die erste modulare Sicherheits-Steuerungseinrichtung 800 (z. B. eine erste modulare Sicherheits-Steuerungseinrichtung 800 wie sie in Fig. 8 gezeigt ist) umfasst eine erste Kommunikationsschnittstelle 804 (zur Anbindung an das erste Quellnetzwerk 1010), eine zweite Kommunikationsschnittstelle 805 (zur Anbindung an das erste Zielnetzwerk 1016), eine erste Verarbeitungseinheit 215, eine erste Grundgerät-Verarbeitungseinheit 115, ein Steuerungs-Grundgerät 100 und ein erstes Sicherheitsmodul 210, wobei das Sicherheitsmodul über eine Datenschnittstelle 150 mit dem Steuerungs-Grundgerät 100 kommunikativ verbunden ist.

Die erste Verarbeitungseinheit 215 und die erste Paketzusatzdatenverarbeitungseinheiten 825 sind als integrale Elemente des ersten Sicherheitsmoduls 210 ausgebildet.

Die erste Kommunikationsschnittstelle 805 und/oder die zweite Kommunikationsschnittstelle 805 können beispielsweise als integrale Elemente des Steuerungs-Grundgerätes 100 ausgebildet sein. Alternativ können die erste Kommunikationsschnittstelle 805 und/oder die zweite Kommunikationsschnittstelle 805 als integrale Elemente des Sicherheitsmoduls 210 ausgebildet sein.

Auf analoge Weise können die dritte Kommunikationsschnittstelle und/oder die vierte Kommunikationsschnittstelle für die zweite modulare Sicherheits-Steuerungseinrichtung ausgebildet sein.

Über die erste Kommunikationsschnittstelle 804 hat dabei die erste Klassifikationseinheit 820 Zugriff auf das erste Quellnetzwerk 1010 zum Selektieren der Netzwerkpakete.

Über die zweite Kommunikationsschnittstelle 805 werden die kryptographisch geschützten Netzwerkpakete an das erste Zielnetzwerk 1016 übergeben bzw. gesendet.

Zudem ist die kryptographische Verarbeitung selbst auf eine sicherheitsmodulinterne Verarbeitung und eine sicherheitsmodulexterne Verarbeitung verteilt. Die sicherheitsmodulinterne Verarbeitung wird durch die erste Verarbeitungseinheit 215 realisiert, wohingegen die sicherheitsmodulexterne Verarbeitung durch die erste Grundgerät-Verarbeitungseinheit 115 realisiert wird. Vorzugsweise/optional gibt es einen direkten Datenpfad (gestrichelte Verbindung) von der Klassifizierungseinheit 820 zur der sicherheitsmodulexternen Verarbeitung 115, wobei der Datenpfad insbesondere mittels eines Kommunikationsbusses und einer optional gesicherten Schnittstelle realisiert wird.

Die erste Verarbeitungseinheit 215 des Sicherheitsmoduls soll beispielsweise einen Schlüsselstrom zur Verfügung stellen. Die Parametrisierung (z. B. Wahl von Schüssel und IV) des Schlüsselstroms erfolgt beispielsweise anhand der Paketzusatzdaten. Die erste Grundgerät-Verarbeitungseinheit 115 führt dann beispielsweise die Klartextdaten mit dem Schlüsselstrom zusammen.

Alternativ oder zusätzlich kann beispielsweise - je nach gewählter Implementierung - ein Datenpfad (oder eine Datenverbindung) zwischen der ersten Paketzusatzdatenverarbeitungseinheit 825 und der ersten Grundgerät-Verarbeitungseinheit 115 vorgesehen sein (nicht dargestellt), um beispielsweise in der ersten Grundgerät-Verarbeitungseinheit 115 die kryptographisch geschützten Netzwerkpakete zu erzeugen. In der ersten Anpassungseinheit 840 werden dann insbesondere die Pakete noch an das erste Zielnetzwerk 1016 angepasst.

Es kann beispielsweise sinnvoll sein, das Steuerungs-Grundgerätes 100 mittels einer erste Unterteilung 130 in zwei Steuerungs-Grundgeräteuntereinheiten, beispielsweise eine erste Untereinheit A und einen erste Untereinheit B. (z. B. eine physikalische Trennung in dem jede der Untereinheiten zum Realisieren ihrer Funktionen einen eigenen Prozessor und einen eigenen Speicherbaustein aufweisen).

Die erste Untereinheit A übernimmt die Klassifikation/das Selektieren der Pakete. Entsprechend sind die erste Konfigurationseinheit 821 und die erste Klassifikationseinheit 820 als integrale Elemente der ersten Untereinheit A des Steuerungs-Grundgerätes 100 ausgebildet.

Die erste Anpassungseinheit 840 und die erste Grundgerät-Verarbeitungseinheit 115 sind als integrale Elemente der zweiten Untereinheit B des Steuerungs-Grundgerätes 100 ausgebildet.

In einer weiteren Variante (nicht dargestellt) ist die erste Paketzusatzdatenverarbeitungseinheit 825 ein integrales Element des Steuerungs-Grundgerätes 100 (wird also in das das Grundgerät verlegen). In diesem Fall kann die die erste Paketzusatzdatenverarbeitungseinheit 825 ggf. ein Teil der ersten Untereinheit A oder der zweiten Untereinheit B sein. Dadurch vereinfacht sich die Schnittstelle 150 deutlich, da die für die Komponente 840 bestimmten Daten nicht über das externe Modul übertragen werden müssen.

Der Aufbau für die entgegengesetzte Kommunikationsrichtung kann für eine zweite modulare Sicherheits-Steuerungseinrichtung spiegelbildlich bzw. analog realisiert werden. Auch das Steuerungs-Grundgerät der zweiten modularen Sicherheits-Steuerungseinrichtung ist mittels einer zweiten Unterteilung in zwei Steuerungs-Grundgeräteuntereinheiten, beispielsweise eine dritte Untereinheit C und eine vierte Untereinheit D, unterteilt. Eine solche Unterteilung kann für dieses Ausführungsbeispiel oder andere Ausführungsbeispiele beispielsweise durch eine funktionale und/oder eine elektrische und/oder eine räumliche und/oder eine mechanische Trennung/Unterteilung/Aufteilung der entsprechenden Bauteile voneinander realisiert werden. So können insbesondere die entsprechenden Bauteile der Untereinheit C auf einer Platine/Leiterplatte untergebracht sein und die Bauteile der Untereinheit D auf einer weiteren Platine/Leiterplatte untergebracht sein.

Die dritte Untereinheit C übernimmt die Klassifikation/das Selektieren der Pakete. Entsprechend sind die zweite Konfigurationseinheit und die zweite Klassifikationseinheit als integrale Elemente der dritten Untereinheit des Steuerungs-Grundgerätes der zweiten modularen Sicherheits-Steuerungseinrichtung ausgebildet.

Die zweite Anpassungseinheit und eine zweite Grundgerät-Verarbeitungseinheit sind entsprechend als integrale Elemente der vierten Untereinheit C des Steuerungs-Grundgerätes der zweiten modularen Sicherheits-Steuerungseinrichtung ausgebildet.

Dieses Ausführungsbeispiel ist dahingehend vorteilhaft, da die erste kryptographische Verarbeitungseinheit nur Zugriff auf die Paketzusatzdaten erhält und keinen Zugriff auf die Klartextdaten hat(also auf die bisher noch nicht kryptographisch verarbeiteten Netzwerkpakete). Dies ist vorteilhaft hinsichtlich der Vertrauenswürdigkeit und reduziert die Bandbreite der Schnittstelle zwischen dem Grundgerät und dem Sicherheitsmodul (z. B. Klartextdaten müssen nicht ans Sicherheitsmodul übergeben werden).

Auch ist es beispielsweise möglich, dass unterschiedliche Ausführungsformen der modularen Sicherheits-Steuerungseinrichtungen jeweils für die Sender- und Empfängerseite realisiert werden können und miteinander kombiniert (miteinander kommunizieren) können - sofern sie derart ausgestaltet sind, dass sie jeweils kompatible kryptographische Funktionalitäten realisieren.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Erste modulare Sicherheits-Steuerungseinrichtung (800) zum Senden kryptographisch geschützter Netzwerkpakete, umfassend:
- ein Steuerungs-Grundgerät (100);
- eine erste Klassifikationseinheit (820), wobei
- die erste Klassifikationseinheit (820) mittels eines Paketfilters zum Selektieren von Netzwerkpaketen unter Verwendung von vorgegebenen Selektionsparamatern eingerichtet ist;
- ein erstes Sicherheitsmodul (200, 210, 300), wobei
- das Sicherheitsmodul für eine kryptographische Verarbeitung zumindest eines Netzwerkpaketteils der selektierten Netzwerkpakete eingerichtet ist,
- das erste Sicherheitsmodul (200, 210, 300) mittels einer Datenverbindung über eine Datenschnittstelle (150) mit dem Steuerungs-Grundgerät (100) verbunden ist;
- eine erste Paketanpassungseinheit (840), wobei
- die erste Paketanpassungseinheit (840) dazu eingerichtet ist, die kryptographisch verarbeiteten Netzwerkpakete an ein erstes Zielnetzwerk (1016) anzupassen,
- das Steuerungs-Grundgerät (100) zum Zusammenwirken mit dem ersten Sicherheitsmodul (200, 210, 300) eingerichtet ist, damit die erste modulare Sicherheits-Steuerungseinrichtung (800) die kryptographisch verarbeiteten Netzwerkpakete als kryptographisch geschützte Netzwerkpakete an das erste Zielnetzwerk (1016) sendet.

2. Erste modulare Sicherheits-Steuerungseinrichtung (800) nach Anspruch 1, wobei das erste Sicherheitsmodul (200, 210, 300) die erste Paketanpassungseinheit (840) und/oder die erste Klassifizierungseinheit (820) umfasst.

3. Erste modulare Sicherheits-Steuerungseinrichtung (800) nach Anspruch 1 oder 2, wobei das Steuerungs-Grundgerät (100) die erste Paketanpassungseinheit (840) und/oder die erste Klassifizierungseinheit (820) umfasst.

4. Erste modulare Sicherheits-Steuerungseinrichtung (800) nach einem der vorhergehenden Ansprüche, wobei das erste Sicherheitsmodul (200, 210, 300) lösbar mit dem Steuerungs-Grundgerät (100) verbunden ist.

5. Erste modulare Sicherheits-Steuerungseinrichtung (800) nach Anspruch 4, wobei das Steuerungs-Grundgerät (100) bei gelöstem ersten Sicherheitsmodul (200, 210, 300) mit einer Grundgeräte-Funktionalität betreibbar ist.

6. Erste modulare Sicherheits-Steuerungseinrichtung (800) nach Anspruch 4 oder 5, wobei das Steuerungs-Grundgerät (100) weiterhin zum Zusammenwirken mit einem gegen das erste Sicherheitsmodul (200, 210) austauschbaren weiteren Sicherheitsmodul (300) mit einer zweiten kryptographischen Funktionalität zu der kryptographischen Verarbeitung und/oder einer weiteren Sicherheitsfunktion der Sicherheits-Steuereinrichtung eingerichtet (800) ist.

7. Erste modulare Sicherheits-Steuerungseinrichtung (800) nach einem der vorhergehenden Ansprüche, wobei
- das Steuerungs-Grundgerät (100) ein Gehäuse umfasst,
- im Gehäuse eine Ausnehmung zur zumindest teilweisen Aufnahme des ersten Sicherheitsmoduls (200, 210, 300) ausgebildet und eingerichtet ist,
- weiterhin im Steuerungs-Grundgerät (100) ein Schnittstellen-Verbindungselement für die Datenschnittstelle derart vorgesehen ist, dass beim in der Ausnehmung aufgenommenen ersten Sicherheitsmodul (200, 210, 300) ein Datenaustausch zwischen Steuerungs-Grundgerät (100) und ersten Sicherheitsmodul (200, 210, 300) erfolgt.

8. Erste modulare Sicherheits-Steuerungseinrichtung (800) nach einem der vorhergehenden Ansprüche, wobei
- die erste Klassifikationseinheit (820) zum Speichern von Paketzusatzdaten für ein jeweiliges Netzwerkpaket eingerichtet ist und/oder
- die erste Paketanpassungseinheit (840) beim Anpassen zumindest einen Teil der Paketzusatzdaten berücksichtigt und/oder
- das erste Sicherheitsmodul (200, 210, 300) zumindest einen Teil der Paketzusatzdaten beim kryptographischen Verarbeiten berücksichtigt.

9. Erste modulare Sicherheits-Steuerungseinrichtung (800) gemäß einem der vorhergehenden Ansprüche, wobei
- die Einheiten jeweils gesicherte Schnittstellen aufweisen,
- ein Übermitteln von Daten an die Einheiten oder Abrufen von Daten von den Einheiten über die jeweilige gesicherte Schnittstelle durchführbar ist.

10. Zweite modulare Sicherheits-Steuerungseinrichtung (900) zum Empfangen kryptographisch geschützter Netzwerkpakete, umfassend:
- ein Steuerungs-Grundgerät (100);
- eine zweite Klassifikationseinheit (920), wobei
- die zweite Klassifikationseinheit (920) mittels eines Paketfilters zum Selektieren von Netzwerkpaketen unter Verwendung von vorgegebenen Selektionsparamatern eingerichtet ist,
- zumindest ein Netzwerkpaketteil der selektierten Netzwerkpakete kryptographisch geschützt ist;
- ein zweites Sicherheitsmodul (200, 220, 300), wobei
- das zweite Sicherheitsmodul (200, 220, 300) zum Aufheben und/oder Auswerten eines kryptographischen Schutzes des geschützten Netzwerkpaketteils der selektierten Netzwerkpakete eingerichtet ist,
- das zweite Sicherheitsmodul (200, 220, 300) mittels einer Datenverbindung über eine Datenschnittstelle (150) mit dem Steuerungs-Grundgerät (100) verbunden ist;
- eine zweite Paketanpassungseinheit (940), wobei
- die zweite Paketanpassungseinheit (940) dazu eingerichtet ist, die ausgewerteten und/oder die Netzwerkpakete ohne kryptographischen Schutz an ein zweites Zielnetzwerk (1012) anzupassen,
- das Steuerungs-Grundgerät (100) zum Zusammenwirken mit dem zweiten Sicherheitsmodul (200, 220, 300) eingerichtet ist, damit die zweite modulare Sicherheits-Steuerungseinrichtung (900) die ausgewerteten und/oder die Netzwerkpakete ohne kryptographischen Schutz an das zweite Zielnetzwerk sendet.

11. Zweite modulare Sicherheits-Steuerungseinrichtung (900) nach Anspruch 10, wobei
- beim Auswerten eine Integrität der Netzwerkpakete überprüft wird,
- insbesondere das Senden der Netzwerkpakete in das zweite Netzwerk abhängig von einem Ergebnis des Auswertens unterdrückt wird.

12. Zweite modulare Sicherheits-Steuerungseinrichtung nach einem der vorhergehenden Ansprüche, wobei
- die zweite Klassifikationseinheit (820) zum Speichern von Paketzusatzdaten für ein jeweiliges Netzwerkpaket eingerichtet ist, und/oder
- die zweite Paketanpassungseinheit (840) beim Anpassen zumindest einen Teil der Paketzusatzdaten berücksichtigt, und/oder
- das zweite Sicherheitsmodul (200, 220, 300) zumindest einen Teil der Paketzusatzdaten beim Auswerten oder Aufheben des kryptographischen Schutzes berücksichtigt.

13. Verfahren zum Senden kryptographisch geschützter Netzwerkpakete mit folgenden Verfahrensschritten:
- Selektieren (610) von Netzwerkpaketen mittels eines Paketfilters unter Verwendung von vorgegebenen Selektionsparamatern;
- kryptographisches Verarbeiten (620) zumindest eines Netzwerkpaketteils der jeweils selektierten Netzwerkpakete;
- Anpassen der kryptographisch (630) verarbeiteten Netzwerkpakete an ein erstes Zielnetzwerk;
- Senden der kryptographisch verarbeiteten Netzwerkpakete als kryptographisch (640) geschützte Netzwerkpakete an das erste Zielnetzwerk.

14. Verfahren zum Empfangen kryptographisch geschützter Netzwerkpakete mit folgenden Verfahrensschritten:
- Empfangen und Selektieren (710) von Netzwerkpaketen mittels eines Paketfilters unter Verwendung von vorgegebenen Selektionsparamatern, wobei zumindest ein Teil eines jeweiligen Netzwerkpaketes kryptographisch geschützt ist;
- Aufheben und/oder Auswerten (720) eines kryptographischen Schutzes des geschützten Netzwerkpaketteils der jeweils selektierten Netzwerkpakete;
- Anpassen (730) der ausgewerteten und/oder der Netzwerkpakete ohne kryptographischen Schutz an ein zweites Zielnetzwerk;
- Senden (740) der ausgewerteten Netzwerkpakete und/oder der Netzwerkpakete ohne kryptographischen Schutz an das zweite Zielnetzwerk.

15. Computerprogrammprodukt mit Programmbefehlen zur Durchführung der Verfahren nach einem der Ansprüche 13 oder 14.

16. Computerprogrammprodukt mit Programmbefehlen für ein Erstellungsgerät, das mittels der Programmbefehle konfiguriert wird, die eine der modularen Sicherheits-Steuerungseinrichtungen nach einem der Anspruch 1-12 zu erstellen.

17. Bereitstellungsvorrichtung für das Computerprogrammprodukt nach Anspruch 15 und/oder 16, wobei die Bereitstellungsvorrichtung das Computerprogrammprodukt speichert und/oder bereitstellt.
